# EUROPEAN PATENT APPLICATION

(11) **EP 4 842 126 A1**
(43) Date of publication of application: **18.11.2026**
(21) Application number: 25751132.9
(22) Date of filing: 17.01.2025
(51) Int. Cl.: H04W 72/566

(54) **COMMUNICATION METHOD, APPARATUS, AND SYSTEM**

(30) Priority: 08.02.2024 CN 202410179380
(71) Applicant: Huawei Technologies Co., Ltd., Shenzhen, Guangdong 518129 (CN)
(72) Inventor: ZANG, Xin, Shenzhen, Guangdong 518129 (CN); PAN, Qi, Shenzhen, Guangdong 518129 (CN); ZHOU, Runze, Shenzhen, Guangdong 518129 (CN)
(74) Representative: Körber, Martin Hans
(86) International application number: PCT/CN2025/073090
(87) International publication number: WO 2025/167530

(57) **Abstract**

Embodiments of this application relate to the field of communication technologies, and provide a communication method and apparatus, and a system. The method includes: A first apparatus receives a first data packet; the first apparatus determines a first protocol data unit set to which the first data packet belongs; and the first apparatus determines a differentiated services code point of the first data packet based on a protocol data unit set importance in the first protocol data unit set. In this application, after determining the first protocol data unit set to which the first data packet belongs, the first apparatus determines the differentiated services code point of the first data packet based on a protocol data unit set importance in a protocol data unit set. The protocol data unit set importance is protocol data unit set information, and a value of the differentiated services code point may indicate a transmission priority. Therefore, in this application, the value of the differentiated services code point may be determined in quality of service processing based on a protocol data unit set.

## Description

This application claims priority to Chinese Patent Application No. 202410179380.3, filed with the China National Intellectual Property Administration on February 8, 2024 and entitled "COMMUNICATION METHOD AND APPARATUS, AND SYSTEM", which is incorporated herein by reference in its entirety.

### TECHNICAL FIELD

This application relates to the field of communication technologies, and in particular, to a communication method and apparatus, and a system.

### BACKGROUND

With development of communication technologies, protocol data unit sets (protocol data unit sets, PDU Sets) are introduced into some communication systems, to meet requirements of new media services such as ultra-high-definition video and extended reality (extended reality, XR).

When data packets (for example, a data packet corresponding to a video service) are transmitted by using PDU Sets, because PDU Set information (PDU Set information) includes a PDU Set importance (PDU Set importance, PSI), and different PSIs indicate different PDU Set importances, transmission priorities need to be set for the PDU Sets, to implement transmission between PDU Sets with different PSIs. However, it is currently unclear how to set a priority of a PDU Set.

### SUMMARY

This application provides a communication method and apparatus, and a system, to determine a value of a differentiated services code point corresponding to a protocol data unit set in a scenario of quality of service processing based on the protocol data unit set.

The technical solutions are as follows.

According to a first aspect, an embodiment of this application provides a communication method, including: A first apparatus receives a first data packet; the first apparatus determines a first protocol data unit set to which the first data packet belongs; the first apparatus determines a differentiated services code point of the first data packet based on a protocol data unit set importance in the first protocol data unit set; alternatively, the first apparatus receives the first protocol data unit set; and the first apparatus determines a differentiated services code point of the first protocol data unit set based on the protocol data unit set importance in the first protocol data unit set. In this specification, a first scenario is used as an example. A description of the second scenario is similar to that of the first scenario, and only the first protocol data unit set needs to be replaced.

In a possible implementation, protocol data unit set importance information indicated by the first protocol data unit set is the same as protocol data unit set importance information indicated by the first data packet in the first protocol data unit set.

In this application, after determining the first protocol data unit set to which the first data packet belongs, the first apparatus determines the differentiated services code point of the first data packet in the first protocol data unit set based on the protocol data unit set importance in the protocol data unit set. The protocol data unit set importance may be indicated by protocol data unit set importance information in protocol data unit set information, may be indicated by load information of the first data packet, may be indicated by a data type (media type, payload type) of the first data packet in the protocol data unit set, or may be indicated by other information such as a priority or a sending order of the first data packet in the protocol data unit set. Because a value of the differentiated services code point may indicate a transmission priority, after determining the differentiated services code point of the first data packet in the first protocol data unit set, the first apparatus may set a priority of the protocol data unit set.

In a possible implementation, the differentiated services code point is used to determine a priority for transmitting the first protocol data unit set between the first apparatus and an access network device.

In a possible implementation, the differentiated services code point is used to determine a priority for transmitting a data packet in the first protocol data unit set between the first apparatus and an access network device. Generally, a tail packet in the first protocol data unit set has a higher priority than another data packet in the first protocol data unit set. The first apparatus determines priorities of different data packets in the first protocol data unit set, and the first apparatus determines the tail packet in the first protocol data unit set and another data packet in the first protocol data unit set. The first apparatus adds different differentiated services code points to headers of different data packets in the first protocol data unit set.

In a possible implementation, the method provided in this embodiment of this application further includes: The first apparatus receives first information, where the first information is used to determine a correspondence between a protocol data unit set importance and a differentiated services code point; or the first information is used to determine a correspondence between different data packets in a protocol data unit set and a differentiated services code point; or the first information is used to determine a range of a differentiated services code point of a protocol data unit set in a data flow.

That the first apparatus determines the differentiated services code point of the first protocol data unit set based on the protocol data unit set importance in the first protocol data unit set includes: The first apparatus determines the differentiated services code point of the first protocol data unit set based on the protocol data unit set importance and the correspondence. Alternatively, the first apparatus determines the differentiated services code point of the first protocol data unit set based on the protocol data unit set importance and the specified range of the differentiated services code point of the protocol data unit set.

In a possible implementation, the correspondence is related to a priority of a quality of service flow to which the first protocol data unit set belongs. The priority of the quality of service flow refers to a priority for forwarding a data packet of the quality of service flow, and may be determined based on a differentiated services code point corresponding to the quality of service flow. For example, a larger differentiated services code point indicates a higher priority of the quality of service flow corresponding to the differentiated services code point.

In a possible implementation, the first information includes a first differentiated services code point. The first differentiated services code point corresponds to a first mapping relationship, and the first mapping relationship indicates the correspondence between the protocol data unit set importance and the differentiated services code point. Alternatively, the first mapping relationship indicates a correspondence between different data packets in the protocol data unit set and differentiated services code points.

In a possible implementation, the first differentiated services code point is a differentiated services code point of the quality of service flow to which the first protocol data unit set belongs, and the first differentiated services code point is determined based on a quality of service identifier of the quality of service flow, or is determined based on a quality of service identifier of the quality of service flow and the priority and/or an allocation and retention priority of the quality of service flow. A possible form of the quality of service identifier is a 5G quality of service identifier (5G QoS Identifier, 5QI).

In a possible implementation, the method provided in this embodiment of this application includes: The first apparatus identifies protocol data unit set information corresponding to the first protocol data unit set, where the protocol data unit set information includes one or more of a protocol data unit set sequence number, an indication of an end protocol data unit of a protocol data unit set, a protocol data unit sequence number within a protocol data unit set, a protocol data unit set size in bytes, and a protocol data unit set importance.

In a possible implementation, the first information includes a second mapping relationship. The second mapping relationship indicates a correspondence between a protocol data unit set importance in the quality of service flow to which the first protocol data unit set belongs and a differentiated services code point.

In a possible implementation, the second mapping relationship is determined based on a quality of service identifier of the quality of service flow and the protocol data unit set importance in the first protocol data unit set, or the second mapping relationship is determined based on a quality of service identifier of the quality of service flow, the protocol data unit set importance in the first protocol data unit set, and the priority and/or an allocation and retention priority of the quality of service flow; or the second mapping relationship is determined based on a quality of service identifier of the quality of service flow, valid data/payload of the first data packet in the first protocol data unit set, and the priority and/or an allocation and retention priority of the quality of service flow.

For example, the second mapping relationship is determined based on the quality of service identifier of the quality of service flow, the valid data/payload of the first protocol data unit set, and the priority and/or the allocation and retention priority of the quality of service flow, or the second mapping relationship is determined based on the quality of service identifier of the quality of service flow, the data type of the first protocol data unit set, and the priority and/or the allocation and retention priority of the quality of service flow.

In a possible implementation, the first information includes a quality of service identifier of a quality of service flow to which the first protocol data unit set belongs. The method provided in this embodiment of this application further includes: The first apparatus determines the correspondence based on the quality of service identifier.

In a possible implementation, the first information further includes the priority and/or an allocation and retention priority of the quality of service flow.

In a possible implementation, the first information includes a third mapping relationship. The third mapping relationship indicates a correspondence between a protocol data unit set importance in the quality of service flow to which the first protocol data unit set belongs and a differentiated services code point. The third mapping relationship is determined based on the protocol data unit set importance in the first protocol data unit set, or a quality of service identifier of the quality of service flow.

In a possible implementation, that the first apparatus determines the differentiated services code point of the first protocol data unit set includes: The first apparatus marks the differentiated services code point in an IP packet header of a data packet in the first protocol data unit set, and sends the data packet in the first protocol data unit set to the access network device.

In a possible implementation, the method provided in this embodiment of this application further includes: The first apparatus receives indication information, where the indication information indicates the first apparatus to perform differentiated services code point marking on the first protocol data unit set at a granularity of a protocol data unit set.

According to a second aspect, an embodiment of this application provides a communication method, including: A second apparatus sends indication information, a quality of service identifier, and/or a correspondence between a protocol data unit set importance and a differentiated services code point to a first apparatus, where the indication information indicates the first apparatus to perform differentiated services code point marking on a protocol data unit set at a granularity of a protocol data unit set; or the second apparatus sends, to the first apparatus, indication information and a differentiated services code point range of a protocol data unit set in a data stream, where the indication information indicates the first apparatus to perform differentiated services code point marking on a protocol data unit set at a granularity of a protocol data unit set.

In a possible implementation, the method provided in this embodiment of this application includes: The second apparatus obtains a policy and charging control rule, where the policy and charging control rule indicates to perform differentiated services code point marking on a protocol data unit set at a granularity of a protocol data unit set. Optionally, the policy and charging control rule indicates the quality of service identifier and/or the correspondence between the protocol data unit set importance and the differentiated services code point.

In a possible implementation, the method provided in this embodiment of this application includes: The second apparatus sends a differentiated services code point range of the protocol data unit set to the first apparatus. The first apparatus determines the differentiated services code point of the protocol data unit set based on the sent differentiated services code point range of the protocol data unit set and the protocol data unit set importance.

In a possible implementation, the second apparatus determines the differentiated services code point range of the protocol data unit set based on a quality of service identifier of a quality of service flow and the protocol data unit set importance; or the second mapping relationship is used to determine the differentiated services code point range of the protocol data unit set based on a quality of service identifier of a quality of service flow, a protocol data unit set importance in a first protocol data unit set, and a priority and/or an allocation and retention priority of the quality of service flow; or the second apparatus determines the differentiated services code point range of the protocol data unit set based on a quality of service identifier of a quality of service flow.

In a possible implementation, the method provided in this embodiment of this application includes: The second apparatus sends a first differentiated services code point to the first apparatus. The first differentiated services code point corresponds to a first mapping relationship. The first mapping relationship indicates the correspondence between the protocol data unit set importance and the differentiated services code point. Alternatively, the second apparatus sends a range of the first differentiated services code point to the first apparatus, where the range of the first differentiated services code point is a range of the first differentiated services code point in which a protocol data unit set in a data flow is located.

In a possible implementation, the first differentiated services code point is a differentiated services code point of the quality of service flow, and the first differentiated services code point is determined based on a quality of service identifier of the quality of service flow. Alternatively, the first differentiated services code point is determined based on a quality of service identifier of the quality of service flow and the priority and/or the allocation and retention priority of the quality of service flow.

In a possible implementation, the method provided in this embodiment of this application includes: The second apparatus sends a second mapping relationship to the first apparatus. The second mapping relationship indicates a correspondence between a protocol data unit set importance in a quality of service flow and a differentiated services code point.

In a possible implementation, the second mapping relationship is determined based on a quality of service identifier of the quality of service flow and a protocol data unit set importance, or the second mapping relationship is determined based on a quality of service identifier of the quality of service flow, a protocol data unit set importance in a first protocol data unit set, and a priority and/or an allocation and retention priority of the quality of service flow. Alternatively, the second mapping relationship is determined based on a quality of service identifier of the quality of service flow, a protocol data unit set importance in a first protocol data unit set, and valid data of the first protocol data unit set, or the second mapping relationship is determined based on a quality of service identifier of the quality of service flow, a protocol data unit set importance in a first protocol data unit set, valid data of the first protocol data unit set, and the priority and/or an allocation and retention priority of the quality of service flow.

In a possible implementation, the method provided in this embodiment of this application further includes: The second apparatus obtains a protocol data unit set identification method, where the protocol data unit set identification method is used to identify the first protocol data unit set.

The protocol data unit set identification method may be indicated by using protocol information indicated by protocol description information. For example, in a possible manner, the protocol information is an RTP (real-time transport protocol). It is indicated that a protocol used by the protocol data unit set is the RTP. The protocol data unit set information may be identified by using at least one of the following information: information indicated by an extension header of the RTP, a payload type of the RTP header, a timestamp of the RTP header, and the like. The protocol data unit set information includes but is not limited to one or more of the following parameters: a protocol data unit set sequence number, an indication of an end protocol data unit of a protocol data unit set, a protocol data unit sequence number within a protocol data unit set, a protocol data unit set size in bytes, and protocol data unit set importance.

In an embodiment, the second apparatus obtains the protocol description, and the protocol data unit set identification method may be indicated by using the protocol description information, or may be indicated by using an identification method indicated by a UPF. For example, the UPF indicates, to an SMF through an N4 interface, that the UPF uses an RTP protocol header or an RTP protocol extension header for identification. In a possible implementation, the second apparatus obtains an importance value or an importance value range of the protocol data unit set in the data stream. In a possible implementation, the second apparatus may obtain the importance value or the importance value range of the protocol data unit set in the data stream from any one or more pieces information in a protocol data unit set identification method, a type of the protocol data unit set, and a payload of the protocol data unit set that are provided by an application function network element.

In a possible implementation, the method provided in this embodiment of this application includes: The second apparatus sends a third mapping relationship to the first apparatus. The third mapping relationship indicates a correspondence between a protocol data unit set importance in a quality of service flow and a differentiated services code point. The third mapping relationship is determined based on the protocol data unit set importance in the first protocol data unit set, or is determined based on the quality of service identifier of the quality of service flow.

In a possible implementation, the method provided in this embodiment of this application further includes: The second apparatus sends quality of service configuration information to an access network device, where the quality of service configuration information indicates the access network device to feed back whether the access network device supports service processing of a protocol data unit set. For example, the quality of service configuration information may include a quality of service parameter.

After the second apparatus sends the quality of service configuration information to the access network device, the method provided in this embodiment of this application further includes: The second apparatus receives feedback information from the access network device, where the feedback information indicates that the access network device supports the service processing of the protocol data unit set.

The access network device may support protocol data unit set-based transmission, or may not support protocol data unit set-based transmission.

In an embodiment, after the access network device receives the quality of service configuration information from the second apparatus, and determines that protocol data unit set-based transmission is not supported, the access network device does not perform feedback. In this case, the second apparatus determines that the first apparatus determines the differentiated services code point based on the quality of service identifier of the quality of service flow.

In another embodiment, when the access network device determines that the protocol data unit set-based transmission is supported, the access network device sends feedback information to the second apparatus, where the feedback information is a support indication. In this case, the second apparatus determines, based on the feedback information, that the first apparatus determines, based on the correspondence between the protocol data unit set importance and the differentiated services code point, the differentiated services code point corresponding to the protocol data unit set importance.

In a possible implementation, the method provided in this embodiment of this application further includes: The second apparatus sends indication information to the first apparatus, where the indication information indicates the first apparatus to perform differentiated services code point marking on a data packet at a granularity of a protocol data unit set.

According to a third aspect, an embodiment of this application provides a communication apparatus. The communication apparatus can implement the method in any one of the first aspect or the possible implementations of the first aspect, and therefore, can also achieve beneficial effects in any one of the first aspect or the possible implementations of the first aspect. The communication apparatus may be a first apparatus, or may be a module, for example, a chip used in a first apparatus, that supports the first apparatus in implementing the method in any one of the first aspect or the possible implementations of the first aspect. The communication apparatus can implement the foregoing method by using software, hardware, or hardware executing corresponding software.

In an example, the communication apparatus may include a processing unit and a communication unit. The communication unit is configured to perform receiving/sending-related steps performed by the first apparatus in any one of the first aspect or the possible implementations of the first aspect. The processing unit is configured to perform processing-related steps performed by the first apparatus in any one of the first aspect or the possible implementations of the first aspect.

For example, when the communication apparatus is a chip or a chip system in the first apparatus, the processing unit may be a processor, and the communication unit may be a communication interface. For example, the communication interface may be an input/output interface, a pin, a circuit, or the like. The processing unit executes instructions stored in a storage unit, so that the first apparatus implements the communication method according to any one of the first aspect or the possible implementations of the first aspect. The storage unit may be a storage unit (for example, a register or a cache) in the chip, or may be a storage unit (for example, a read-only memory or a random access memory) that is in the first apparatus and that is located outside the chip.

According to a fourth aspect, an embodiment of this application provides a communication apparatus. The communication apparatus can implement the method in any one of the second aspect or the possible implementations of the second aspect, and therefore, can also achieve beneficial effects in any one of the second aspect or the possible implementations of the second aspect. The communication apparatus may be a second apparatus, or may be a module, for example, a chip used in a second apparatus, that supports the second apparatus in implementing the method in any one of the second aspect or the possible implementations of the second aspect. The communication apparatus can implement the foregoing method by using software, hardware, or hardware executing corresponding software.

In an example, the communication apparatus may include a processing unit and a communication unit. The communication unit is configured to perform receiving/sending-related steps performed by the second apparatus in any one of the second aspect or the possible implementations of the second aspect. The processing unit is configured to perform processing-related steps performed by the second apparatus in any one of the second aspect or the possible implementations of the second aspect.

For example, when the communication apparatus is a chip or a chip system in the second apparatus, the processing unit may be a processor, and the communication unit may be a communication interface. For example, the communication interface may be an input/output interface, a pin, a circuit, or the like. The processing unit executes the instructions stored in the storage unit, so that the second apparatus implements the communication method according to any one of the second aspect or the possible implementations of the second aspect. The storage unit may be a storage unit (for example, a register or a cache) in the chip, or may be a storage unit (for example, a read-only memory or a random access memory) that is in the second apparatus and that is located outside the chip.

According to a fifth aspect, this application provides a first apparatus, including a processor, where the processor is connected to a memory. The processor reads instructions stored in the memory, so that the first apparatus performs the method in any one of the first aspect or the optional designs of the first aspect. The first apparatus may further include a memory. Optionally, the first apparatus may further include a communication interface.

According to a sixth aspect, this application provides a second apparatus, including a processor, where the processor is connected to a memory. The processor reads instructions stored in the memory, so that the second apparatus performs the method in any one of the second aspect or the optional designs of the second aspect. The second apparatus may further include a memory. Optionally, the second apparatus may further include a communication interface.

According to a seventh aspect, this application provides a communication system. The system includes a first apparatus, a second apparatus, an access network device, and an application server. The first apparatus is configured to perform the method in any one of the first aspect or the possible implementations of the first aspect, and the second apparatus is configured to perform the method in any one of the second aspect or the possible implementations of the second aspect. The access network device is configured to receive a data packet generated by the first apparatus, and the application server is configured to send the data packet to the first apparatus.

According to an eighth aspect, an embodiment of this application provides a computer-readable storage medium. The computer-readable storage medium stores a computer program or instructions. When the computer program or the instructions are run on a computer, the computer is enabled to perform the communication method according to any one of the first aspect or the possible implementations of the first aspect.

According to a ninth aspect, an embodiment of this application provides a computer-readable storage medium. The computer-readable storage medium stores a computer program or instructions. When the computer program or the instructions are run on a computer, the computer is enabled to perform the communication method according to any one of the second aspect or the possible implementations of the second aspect.

According to a tenth aspect, an embodiment of this application provides a computer program product including instructions, including a computer program. When the program runs on a computer, the computer is enabled to perform the communication method in any one of the first aspect or the possible implementations of the first aspect.

According to an eleventh aspect, an embodiment of this application provides a computer program product including instructions, including a computer program. When the program runs on a computer, the computer is enabled to perform the communication method in any one of the second aspect or the possible implementations of the second aspect.

According to a twelfth aspect, this application provides a chip, used in a first apparatus. The chip includes at least one processor and a communication interface. The communication interface is coupled to the at least one processor. The processor is configured to run a computer program or instructions, to perform the method in any one of the first aspect or the possible implementations of the first aspect. The communication interface is configured to communicate with a module other than the chip.

According to a thirteenth aspect, this application provides a chip, used in a second apparatus. The chip includes at least one processor and a communication interface. The communication interface is coupled to the at least one processor. The processor is configured to run a computer program or instructions, to perform the method in any one of the second aspect or the possible implementations of the second aspect. The communication interface is configured to communicate with a module other than the chip.

Specifically, the chip provided in this embodiment of this application further includes a memory, configured to store the computer program or the instructions.

Any apparatus, computer storage medium, computer program product, chip, or communication system provided above is configured to perform the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a diagram of an architecture of a communication system according to an embodiment of this application;
FIG. 2 is a diagram of an architecture of a terminal device according to an embodiment of this application;
FIG. 3 is a diagram of layers in an application processor according to an embodiment of this application;
FIG. 4 is a diagram of layers of a communication protocol according to an embodiment of this application;
FIG. 5 is a diagram of an architecture of a terminal device according to an embodiment of this application;
FIG. 6 is a schematic flowchart of PDU set-based QoS processing according to an embodiment of this application;
FIG. 7 is a diagram of a communication method according to an embodiment of this application;
FIG. 8A and FIG. 8B are diagrams of a protocol header and an RTP extension header of an RTP protocol according to an embodiment of this application;
FIG. 9 is a schematic flowchart 1 of a specific implementation of a communication method according to an embodiment of this application;
FIG. 10A and FIG. 10B are a schematic flowchart 2 of a specific implementation of a communication method according to an embodiment of this application;
FIG. 11 is a schematic flowchart 3 of a specific implementation of a communication method according to an embodiment of this application;
FIG. 12 is a diagram of a structure of a communication apparatus according to an embodiment of this application;
FIG. 13 is a diagram of a hardware structure according to an embodiment of this application; and
FIG. 14 is a diagram of a structure of a chip according to an embodiment of this application.

### DESCRIPTION OF EMBODIMENTS

To clearly describe technical solutions in embodiments of this application, terms such as "first" and "second" are used in the embodiments of this application to distinguish between same items or similar items that provide basically same functions or purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

It should be noted that, in this application, the term "example", "for example", or the like is used to give an example, an illustration, or a description. Any embodiment or design solution described as an "example" or "for example" in this application should not be interpreted as being more preferred or having more advantages than another embodiment or design solution. To be precise, use of the words such as "example" or "for example" is intended to present a related concept in a specific manner.

In this application, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between the associated objects. The term "at least one of the following items (pieces)" or an expression similar to the term indicates any combination of the items, and includes a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions in embodiments of this application may be applied to various communication systems, for example, a 4th generation (4th generation, 4G) system, various systems evolved based on the 4G system, a 5G system, and various systems evolved based on the 5G system. The 4G system may also be referred to as an evolved packet system (evolved packet system, EPS). A core network of the 4G system may be referred to as an evolved packet core (evolved packet core, EPC) network, and an access network may be referred to as a long-term evolution (long-term evolution, LTE). A core network of the 5G system may be referred to as a 5GC (5G core), and an access network may be referred to as a new radio (new radio, NR). The technical solutions provided in this application may also be applied to a future communication system, for example, a sixth-generation mobile communication system. The technical solutions in embodiments of this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, and an internet of things (internet of things, IoT) communication system, or another communication system.

The system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems. In embodiments of this application, examples in which the provided methods are applied to a 5th generation mobile communication technology (5th generation mobile networks or 5th generation wireless system, 5th-Generation, 5G) network are used for description.

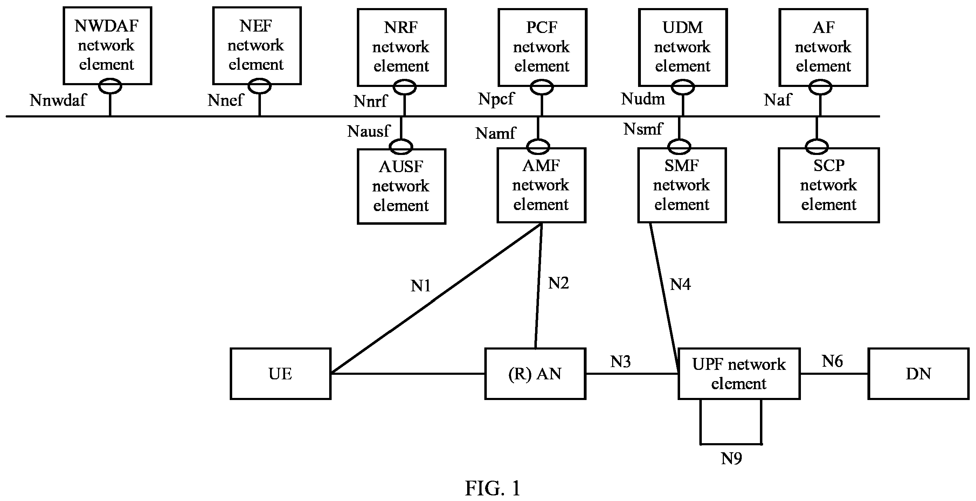

As an example for description, FIG. 1 is a diagram of an architecture of a 5G system to which embodiments of this application are applicable. FIG. 1 shows an example of the diagram of the network architecture of the 5G system. The network architecture may further include but is not limited to the following network elements: a terminal device, an access network (access network, AN) device, a user plane function (user plane function, UPF) network element, a data network (data network, DN), an authentication server function (authentication server function, AUSF) network element, an access and mobility management function (access and mobility management function, AMF) network element, a session management function (session management function, SMF) network element, a service control point (Service Control Point, SCP) network element, a network data analytics function (network data analytics function, NWDAF) network element, a network exposure function (network exposure function, NEF) network element, a network repository function (network repository function, NRF) network element, a policy control function (policy control function, PCF) network element, a unified data management (unified data management, UDM) network element, an application function (application function, AF) network element, and the like.

It should be noted that the access network device, the UPF network element, the AMF network element, the SMF network element, the NEF network element, the NRF network element, the PCF network element, the UDM network element, the AF network element, and the like in FIG. 1 are merely names, and the names constitute no limitation on the network elements. In the 5G network and another future network, entities or devices corresponding to these network elements may have other names. This is not specifically limited in embodiments of this application.

For example, the UDM network element may alternatively be replaced with a home subscriber server (home subscriber server, HSS), a user subscription database (user subscription database, USD), a database network element, or the like. Unified descriptions are provided herein and details are not described below again.

Functions of some network elements in FIG. 1 are as follows.

The UPF network element is a gateway provided by an operator, and is a gateway for communication between an operator network and a DN. The UPF network element mainly includes the following functions: user plane related functions such as data packet routing and transmission, packet detection, service usage reporting, quality of service (quality of service, QoS) processing, lawful interception, uplink packet detection, and downlink data packet storage.

The data network is an operator network that provides a data transmission service for a terminal device, for example, the internet (internet) or an internet protocol multimedia subsystem (internet protocol multimedia subsystem, IMS). For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like.

The application server is mainly configured to run at least one application, to process service data of an extended reality (extended reality, XR) service. An application running on the application server may also be referred to as an "application instance", and is specifically a server application program, for example, an instance (instance) that is run on an edge data network and that is deployed by XR such as augmented reality (augmented reality, AR) or virtual reality (virtual reality, VR).

The AUSF network element is mainly configured to: receive a request from the AMF network element for performing identity authentication on the terminal device, request a key from the UDM network element, and then forward the key delivered by the UDM network element to the AMF network element for authentication processing.

The AMF network element mainly includes the following functions related to access and mobility: connection management, mobility management, registration management, access authentication and authorization, reachability management, security context management, and the like.

The SMF network element is mainly configured: to manage a session, allocate and manage an internet protocol (internet protocol, IP) address of a terminal device, select an endpoint that can manage a user plane function interface and a policy control and charging function interface, notify downlink data, and so on.

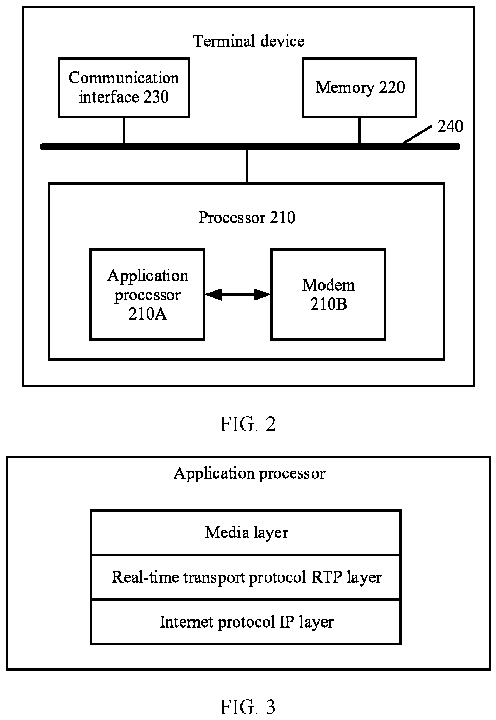

It should be noted that FIG. 2 merely shows one SMF network element as an example. Certainly, a plurality of SMF network elements may be included. For example, an SMF network element 1 and an SMF network element 2 are included. This is not specifically limited in embodiments of this application.

The SCP network element is mainly configured to separate network switching from service control.

The NWDAF network element is mainly configured to perform intelligent network data analysis.

The NEF network element mainly includes the following functions: secure exposure of a service and a capability provided by a 3rd generation partnership project (3rd generation partnership project, 3GPP) network function; and conversion or translation of information exchanged with the AF network element and information exchanged with an internal network function, for example, a service identifier of the AF network element and internal 5G core network information such as a data network name (data network name, DNN) and single network slice selection assistance information (single network slice selection assistance information, S-NSSAI).

The NRF network element mainly includes the following functions: a service discovery function, an NF (network function, NF) text for maintaining an available network function instance, and a service supported by the NRF network element.

The PCF network element is a unified policy framework for guiding network behavior, and provides policy rule information and the like for a control plane function network element, for example, the AMF network element or the SMF network element.

The UDM network element mainly includes the following functions: unified data management, support for authentication credential processing in a 3GPP authentication and key agreement mechanism, user identity processing, access authorization, registration and mobility management, subscription management, messaging management, and the like.

The AF network element is configured to: perform data routing of an application and provide application layer information, and may interact with a policy framework via the NEF network element, or directly interact with the policy framework to perform policy decision request control, and the like.

In the network architecture shown in FIG. 1, the network elements may communicate with each other through interfaces shown in the figure, and some interfaces may be implemented in a manner of non-service-based interfaces. As shown in FIG. 1, the terminal device and the AMF network element may interact with each other through an N1 interface. An interaction message may be referred to as, for example, an N1 message (N1 Message). The access network device and the AMF network element may interact with each other through an N2 interface. The N2 interface may be configured to send a non-access stratum (non-access stratum, NAS) message and the like. The access network device and the UPF network element may interact with each other through an N3 interface. The N3 interface may be configured to transmit user plane data and the like. The SMF network element and the UPF network element may interact with each other through an N4 interface. The N4 interface may be configured to transmit information such as tunnel identifier information of an N3 connection, data buffering indication information, and a downlink data notification message. The UPF network element and the application server may interact with each other through an N6 interface. The N6 interface may be configured to transmit user plane data and the like. The UPF network elements may interact with each other through an N9 interface.

In addition, network elements of a control plane function in FIG. 1 may alternatively communicate with each other through a service-oriented interface. For example, the AUSF network element accesses a service-based architecture through a Nausf interface to provide a corresponding service; the AMF network element accesses the service-based architecture through a Namf interface to provide a corresponding service; and the SMF network element accesses the service-based architecture through a Nsmf interface to provide a corresponding service. Similarly, the NWDAF network element, the NEF network element, the NRF network element, the PCF network element, the UDM network element, and the AF network element access the service-based architecture through respective corresponding interfaces, to provide corresponding services. Details are not described herein. Relationships between other interfaces and the network elements are shown in FIG. 1. For brevity, details are not described herein.

It should be understood that the network architecture to which embodiments of this application are applicable is merely an example for description, and the network architecture to which embodiments of this application are applicable is not limited thereto. Embodiments of this application are applied to any network architecture that can implement functions of the foregoing network elements.

It should be further understood that the AMF network element, the SMF network element, the UPF network element, the PCF network element, and the like shown in FIG. 1 may be understood as network elements configured to implement different functions, for example, may be combined into a network slice as required. The network elements may be independent devices, or may be integrated into a same device to implement different functions, or may be network elements in a hardware device, or may be software functions running on dedicated hardware, or may be virtualized functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, the terms in 5G may still be used for a part or all of the network elements, or other names may be used.

It should be further understood that names of interfaces between the foregoing network elements in FIG. 1 are only examples, and the interfaces may have other names during specific implementation. This is not specifically limited in this application. In addition, names of messages (or signaling) transmitted between the foregoing network elements are merely examples, and do not constitute any limitation on functions of the messages.

The access network device may also be referred to as a radio access network (radio access network, RAN) device. The access network device is configured to provide a network access function for an authorized terminal device in a specific area, and can use transmission tunnels with different quality of service based on levels of terminal devices, service requirements, and the like. The access network device can manage a radio resource, provide an access service for the terminal device, and further complete forwarding of control information and user data between the terminal device and a core network. The access network device may also be understood as a base station (base station) in a conventional network.

For example, the access network device in embodiments of this application may be any communication device that has a wireless transceiver function and that is configured to communicate with the terminal device. The access network device includes but is not limited to an evolved NodeB (evolved NodeB, eNB), a next generation NodeB (next generation NodeB, gNB) in an NR system, a transmission reception point (transmission reception point, TRP), one antenna panel or a group of (including a plurality of antenna panels) antenna panels of a base station in the 5G network, a network node that forms a gNB or a TRP, for example, a baseband unit (baseband unit, BBU) or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical (physical, PHY) layer protocol and a real-time service, and implements functions of a radio link control (radio link control, RLC) layer, a media access control (media access control, MAC) layer, and a PHY layer. The AAU implements some PHY layer processing functions, radio frequency processing, and a function related to an active antenna. Information at the RRC layer eventually becomes information at the PHY layer, or is converted from information at the PHY layer. Therefore, in this architecture, higher layer signaling such as RRC layer signaling may also be considered to be sent by the DU. It may be understood that the access network device may be a device including one or more of a CU, a DU, or an AAU. In addition, the CU may be classified as an access network device in an access network, or the CU may be classified as an access network device in the core network (core network, CN). This is not limited in this application.

It should be understood that in embodiments of this application, the UPF network element, the application server, the AMF network element, the SMF network element, the NEF network element, the NRF network element, the PCF network element, the UDM network element, and the AF network element all belong to core network devices. The core network device and the access network device may be referred to as network devices.

The terminal device may also be referred to as user equipment (user equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, a user apparatus, or the like. The terminal device may be a device that provides voice/data connectivity for users, for example, a handheld device or a vehicle-mounted device that has a wireless connection function. Currently, some examples of the terminal device may include a mobile phone (mobile phone), a tablet computer (pad), a computer (for example, a laptop computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (internet of things, IoT) system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and terminal device power saving can be implemented by using, for example, a narrowband (narrow band, NB) technology.

In addition, the terminal device may further include a smart printer, a train detector, and the like. Main functions include: collecting data, receiving control information and downlink data from the access network device, sending an electromagnetic wave, and transmitting uplink data to the access network device.

It should be understood that the terminal device may be any device that can access a network. The terminal device may communicate with the access network device by using an air interface technology.

Optionally, the terminal device may be configured to serve as an access network device. For example, the terminal device may serve as a scheduling entity that provides a sidelink signal between terminal devices in V2X, D2D, or the like. For example, a cellular phone communicates with a car through a sidelink signal. The cellular phone and a smart household device communicate with each other without using the access network device.

FIG. 2 is a diagram of a hardware architecture of a terminal device according to an embodiment of this application. For ease of description, FIG. 2 shows only main components of the terminal device. As shown in FIG. 2, the terminal device may include a processor 210, a memory 220, and a communication interface 230.

The processor 210 is mainly configured to: process a communication protocol and communication data, control the entire terminal device, execute a software program, and process data of the software program.

The processor 210 may include one or more processors. For example, the processor 210 may include an application processor (application processor, AP) 210A and a modem (modem) 210B. In addition, the processor 210 may further include a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. The application processor 210 A may include an operating system and an application (application, APP) program running in the operating system. The operating system includes but is not limited to an Android (android) operating system, a Harmony operating system, or the like. The application program may be briefly referred to as an application. The application may be a native application (native application), for example, settings, a home screen, and file management, or may be a third-party application, for example, WeChat, a game, a taxi hailing application, and an XR application. Generally, the application processor 210A may support installation of applications with different functions, to meet different requirements of a user, applications such as drawing, presentation, word processing, a game, a phone, a video player, a music player, an email, instant message sending and receiving, photo management, a camera, a browser, a calendar, a clock, payment, an application market, a home screen, and health management.

For example, an XR media service is used as an example. FIG. 3 is a diagram of layers on an AP side. Specifically, the AP side includes a media layer, a real-time transport protocol (real-time transport protocol, RTP) layer, and an IP layer.

The media layer is configured to process media data of the XR service, for example, decoding and encoding of video media data. For example, the media layer is configured to encode media data to obtain a protocol data unit set (protocol data unit set, PDU set). A PDU set may include a data frame, or may include other service data. This is not limited in embodiments of this application. It should be understood that, in embodiments of this application, the data frame may have another name, for example, a video frame. The data frame is used as an example for description in embodiments of this application, and should not be construed as a limitation on embodiments of this application.

The RTP layer is mainly configured to transmit an audio stream and/or a video stream.

The IP layer is mainly configured to perform process management, file network management, system security permission management, and communication infrastructure between a system and a hardware device.

In embodiments of this application, one PDU set may be split into at least one packet (packet). Specifically, one PDU set is split into at least one packet at the RTP layer, or one PDU set is split into at least one packet at the IP layer. This is not limited in embodiments of this application.

The modem 210B may include a modulator and a demodulator. The modulator is configured to modulate a to-be-sent low-frequency baseband signal into a medium or high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor 210A. The application processor 210A outputs a sound signal through an audio device (which is not limited to a speaker, a receiver, or the like), or displays an image or a video through a display. In some embodiments, the modem 210B may be an independent device. In some embodiments, the modem 210B may be independent of the processor, and is disposed in a same device as a radio frequency module or another functional module.

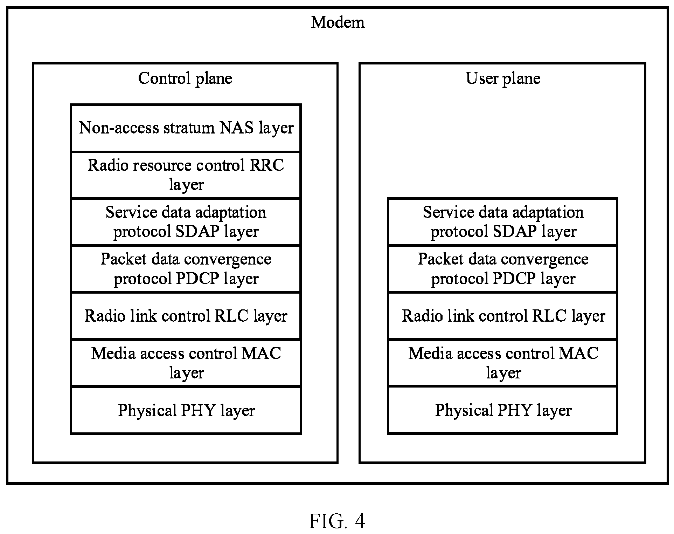

It should be noted that the modem 210B performs modulation and demodulation according to a protocol specified in a supported communication technology. The protocol specified in the communication technology in embodiments of this application may also be referred to as a communication protocol. A communication protocol stack is a sum of communication protocols at all layers. For example, with reference to FIG. 4, a communication protocol stack of the modem 210B may be classified into a control plane and a user plane that are vertically arranged. The control plane is used to transmit control signaling, and mainly includes a non-access stratum (non-access stratum, NAS) layer, a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer. The user plane is used to transmit data information, and mainly includes an SDAP layer, a PDCP layer, an RLC layer, a MAC layer, and a PHY layer. It should be understood that, in different communication technologies, protocol layers of the control plane and the user plane may be divided in different manners, or may be divided in a same manner. The RRC layer, the SDAP layer, the PDCP layer, the RLC layer, the MAC layer, and the PHY layer all belong to an access (access stratum, AS) layer

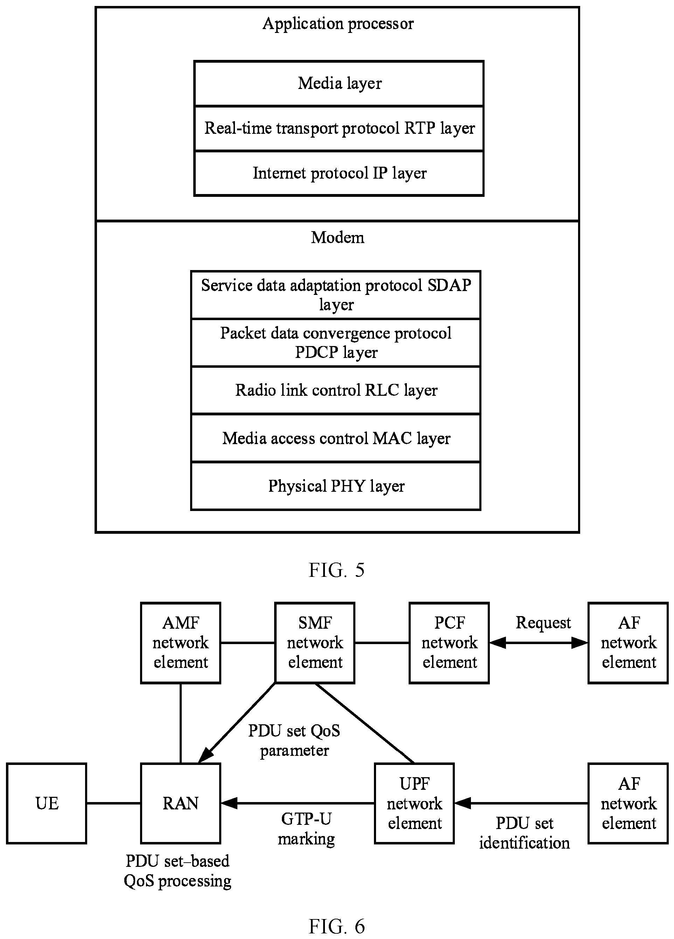

For example, with reference to FIG. 5, for the terminal device, in the AP of the terminal device, the media layer generates a PDU set, and provides the PDU set to a lower layer (for example, the RTP layer). At the RTP layer or the IP layer, the PDU set is split into at least one packet, and the at least one packet obtained through splitting is transmitted to the modem. In the modem of the terminal device, the at least one packet is sent to a network device after being processed by the SDAP layer, the PDCP layer, the RLC layer, the MAC layer, and the PHY layer, to implement uplink transmission, as shown by a broken line with an arrow in FIG. 5.

The memory 220 may be a read-only memory (read-only memory, ROM) or another type of static storage communication device capable of storing static information and instructions, a random access memory (random access memory, RAM) or another type of dynamic storage communication device capable of storing information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage communication device, or any other medium capable of carrying or storing expected program code in a form of instructions or data structures and capable of being accessed by a computer, but is not limited thereto. The memory 220 may exist independently, or may be integrated with the processor 210.

The memory 220 is configured to store a software program for executing the solutions of this application, and the processor 210 controls execution of the software program. For a specific implementation, refer to the method embodiments. Details are not described herein again.

The communication interface 230 is configured to communicate with another device or a communication network. For example, the communication interface 230 may include a module, a circuit, a transceiver, or any apparatus that can implement communication. Optionally, the communication interface 230 may alternatively be an input/output interface located in the processor 210, and is configured to implement signal input and signal output of the processor.

Optionally, the terminal device may further include a bus 240. The processor 210, the memory 220, and the communication interface 230 may be connected to each other through the bus 240. The bus 240 may be a peripheral component interconnect (peripheral component interconnect, PCI for short) bus, an extended industry standard architecture (extended industry standard architecture, EISA for short) bus, or the like. The bus 240 may be classified into an address bus, a data bus, a control bus, and the like. For ease of representation, only one thick line is used to represent the bus in FIG. 2, but this does not mean that there is only one bus or only one type of bus.

For ease of understanding of embodiments of this application, the following describes technical terms used in this application.
1. Protocol data unit set (protocol data unit set, PDU Set): The PDU set includes one or more protocol data units (protocol data units, PDUs), and the PDU carries an application layer payload, for example, a video frame or a video slice. The PDU is a data unit transmitted between peer layers. For example, a PDU at a physical layer is a data bit (bit), a PDU at a data link layer is a data frame (frame), a PDU at a network layer is a data packet (packet), a PDU at a transport layer is a data segment (segment), and a PDU at another higher layer is data (data). In the following embodiments of this application, the protocol data unit set is referred to as a PDU set for short.
2. Quality of service (quality of service, QoS): The quality of service is a mechanism and technology used to allocate and manage network resources in a computer network and a communication system to meet specific performance requirements, aiming to ensure that different applications, services, or traffic in the network can obtain an appropriate bandwidth, delay, packet loss rate, and other performance indicators based on their requirements and priorities.
3. Quality of service flow (quality of service flow, QoS flow): The QoS flow is a finest QoS differentiation granularity in a PDU session. A difference between two PDU sessions lies in that the two PDU sessions have different QoS flows. In the 5G system, one QoS flow ID (QFI) is used to identify one QoS flow. Same forwarding processing is performed on user plane data with a same QFI in a PDU session.
4. Differentiated services code point (differentiated services code point, DSCP): The DSCP is an implementation of a type of service (type of service, ToS) in an internet protocol (internet protocol, IP) data packet. In a ToS identifier byte in an IP packet header of each data packet, six used bits and two unused bits are used to differentiate priorities based on a value of the DSCP. A larger value of the DSCP indicates a higher priority. For example, when routing a data packet, a router determines a forwarding priority based on different values of DSCPs of data packets.

The development of 5G also promotes the rapid development of media services. In video services, new media services such as ultra-high-definition video and extended reality (extended reality, XR) emerge. For example, XR services mainly include virtual reality (virtual reality, VR), augmented reality (augmented reality, AR), and mixed reality (mixed reality, MR). The XR service enables coexistence and interaction between physical objects in the real world and digital objects in the virtual world through auxiliary devices, ultimately achieving a perfect fusion of the virtual and the real. However, these new media services pose great challenges to a network transmission bandwidth. For example, a single XR service requires a bandwidth of 80 megabits per second (Mbps). When 4K network television and internet access services are enabled, a recommended bandwidth is 230 megabits per second (Mbps) or higher. Therefore, network transmission efficiency needs to be improved to meet network requirements for fast evolution of the new media services. Therefore, the concept of the PDU set is proposed during data flow transmission.

Currently, a RAN or the UPF network element supports data packet identification at a QoS granularity. Scheduling of QoS flows is independent of each other. For example, there are two QoS flows: a QoS flow 1 and a QoS flow 2. When a data packet in the QoS flow 1 is sent, a data packet in the QoS flow 2 is not considered. FIG. 6 is a schematic flowchart of PDU set-based QoS processing according to this application, and is specifically applied to the network architecture shown in FIG. 1.

The AF network element sends, to the PCF network element, a flow characteristic information protocol description (protocol description) related to a PDU set and QoS parameters (parameters).

In an example, the AF network element may be an application server (application server, AS). For example, the AS sends a request (request) to the PCF network element, where the request includes the protocol description and the QoS parameters.

The PCF network element generates a policy and charging control rule (policy and charging control rule, PCC rule) based on the protocol description related to the PDU set and the QoS parameters, and sends the policy and charging control rule to the SMF network element. The SMF network element generates the QoS parameters and a data packet detection rule based on the PCC rule. The SMF sends a QoS profile including the QoS parameters to the access network device. The SMF sends N4 rules (N4 rules) to the UPF, where the N4 rules include the data packet detection rule.

The UPF network element identifies the PDU set based on the N4 rules.

In an example, the UPF network element identifies data packets that belong to a same PDU set, adds PDU set information (information) to a general packet radio service tunneling protocol for a user plane (general packet radio service tunneling protocol for the user plane, GTP-U) header, and sends a corresponding data packet to the RAN.

The PDU set information includes but is not limited to: a protocol data unit set sequence number (PDU Set sequence number), an indication of an end protocol data unit of the protocol data unit set (indication of an end PDU of the PDU Set), a protocol data unit sequence number within a protocol data unit set (PDU sequence number within a PDU Set), a protocol data unit set size in bytes (PDU Set size in bytes), and a protocol data unit set importance (PDU Set importance, PSI).

The PSI may be used to represent different importances in different PDU sets. For example, transmission of a video by using a PDU set is used for description. Frame types in the video include three types: an I-frame, a P-frame, and a B-frame. The I-frame is a key frame, and may be understood as a complete retention of a frame of picture, and only data of the current frame is required during decoding. The P-frame is a forward difference frame, that is, indicates a difference between the current frame and a previous key frame (or P-frame). During decoding, a previously buffered picture needs to be superimposed with a difference defined by the current frame to generate a final picture. In other words, the P-frame does not have complete picture data, but has only data different from a picture of a previous frame. The B-frame is a bidirectional differential frame. To be specific, the B-frame is used to record a difference between a current frame and a previous/subsequent frame. In other words, during B-frame decoding, both a previously buffered picture and a decoded picture need to be obtained. A final picture can be obtained by superposing a previous picture, a subsequent picture, and data of the frame. It can be learned from the foregoing description that, in comparison, the I-frame is a frame with a high importance, and a priority of a PDU set to which a data packet used to transmit the I-frame belongs may be higher than a priority of a PDU set to which a data packet used to transmit the P-frame and the B-frame belongs.

The SMF network element sends a QoS profile to the access network device, where the QoS profile includes PDU set QoS parameters, and the access network device performs PDU set-based QoS processing based on the PDU set QoS parameters.

The PDU set QoS parameters include but are not limited to: a protocol data unit set delay budget (PDU Set delay budget, PSDB), a protocol data unit set error rate (PDU Set error rate, PSER), and a protocol data unit set integrated handling information (PDU Set integrated handling information, PSIHI).

Transmission priorities of different QoS flows are implemented based on DSCPs. For example, the SMF network element determines a value of a DSCP corresponding to a QoS flow based on a 5G quality of service identifier (5G QoS Identifier, 5QI). Optionally, the SMF network element may further determine a value of a DSCP corresponding to a QoS flow based on a priority (the priority level) and/or an allocation and retention priority (allocation and retention priority, ARP). In addition, data packet marking information (data packet marking information) provided to the UPF network element includes a transport level packet marking value (transport level packet marking value) (for example, a DSCP value of an external internet protocol header). Then, the UPF network element marks a DSCP value in an IP packet header of a data packet in the corresponding QoS flow.

For example, as shown in Table 1, Table 1 is an example of a correspondence between some standardized 5QIs and DSCP values according to this application. If a 5QI of the QoS flow 1 is 2, a DSCP value corresponding to the QoS flow 1 is 36, and a specific meaning of the DSCP value is assured forwarding 42. For other correspondences, refer to Table 1. Details are not described herein.

**Table 1**

| 5QI | DSCP value | Meaning of the DSCP value |
|---|---|---|
| 1 | 46 | Accelerated forwarding |
| 2 | 36 | Assured forwarding 42 |
| 3 | 10 | Assured forwarding 11 |
| 4 | 28 | Assured forwarding 32 |
| 65 | 46 | Accelerated forwarding |
| 66 | 46 | Accelerated forwarding |
| 67 | 34 | Assured forwarding 41 |
| 71 | 28 | Assured forwarding 32 |

In addition, during transmission, a priority also needs to be set for the PDU set, to implement differentiated transmission of a plurality of service types. However, currently, how to set the priority of the PDU set is still unclear. In combination with the conventional technology in which a DSCP corresponding to a QoS flow is set, a priority may be determined by determining a DSCP of a PDU set. Therefore, how to determine the DSCP of the PDU set is a problem that needs to be resolved currently.

To resolve the foregoing problem, this application provides a communication method and apparatus, and a system. In the method, a related parameter of a PDU set is used to mark a DSCP value of the N3/N9 (refer to FIG. 1) in a transmission network, so as to determine DSCPs of different PDU sets in a same QoS flow, and determine a priority of the PDU set based on the DSCPs corresponding to the different PDU sets.

In embodiments of this application, a specific structure of an entity for performing a communication method is not specially limited in embodiments of this application, provided that the entity can run a program that records code for performing the communication method in embodiments of this application, to perform communication by the communication method in embodiments of this application. For example, the communication method provided in embodiments of this application may be performed by a functional module that can invoke and execute a program in a first apparatus, or may be a communication module, for example, a chip, a chip system, or an integrated circuit, used in a first apparatus. These chips, chip systems, and integrated circuits may be disposed inside the first apparatus, or may be independent of the first apparatus. This is not limited in embodiments of this application.

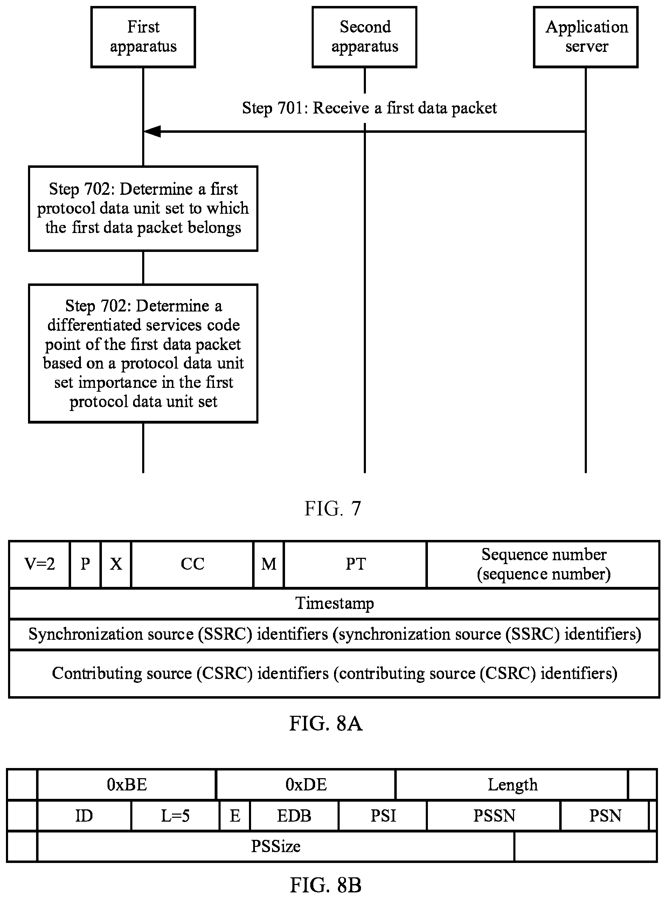

Refer to FIG. 7. An embodiment of this application provides a communication method. The method includes the following steps.

Step 701: A first apparatus receives a first protocol data unit set.

The first protocol data unit set may be sent by an application server to the first apparatus, and includes downlink data, for example, service data of a video frame.

For example, the first apparatus is a UPF network element, and the UPF network element obtains a data packet from an AS.

Step 702: The first apparatus determines the first protocol data unit set.

The first protocol data unit set may include a plurality of data packets. For example, one protocol data unit set may include service data of one video frame, or may include other content. This is not limited in embodiments of this application. For ease of description, in embodiments of this application, a protocol data unit set to which at least one first data packet belongs is denoted as the first protocol data unit set.

Step 703: The first apparatus determines a differentiated services code point of the first protocol data unit set based on a protocol data unit set importance and/or a range of a differentiated services code point of a data flow in which the protocol data unit set is located.

The protocol data unit set importance may be protocol data unit set importance (PDU Set importance, PSI) information (PSI for short in the following embodiments) in protocol data unit set information (PDU Set information), or may be valid data/payload (payload) of the first protocol data unit set, or may be a data type (payload type/media type) of the first protocol data unit set. For example, the protocol data unit set importance is a PSI. A PSI in the protocol data unit set (PDU Set for short in the following embodiments) information is used to represent an importance in a different PDU set. When a network is congested and a sender cannot transmit all data packets, a PDU set with a low PSI level may be discarded first.

In an example, the PSI may be represented in a form of PSI parameter, and may be indicated by the UPF network element to an access network device (for example, a base station).

For example, there are two PDU sets sent by the UPF network element to the base station in a downlink: a PDU set 1 and a PDU set 2. Each PDU set includes a plurality of PDUs. A PSI parameter of the PDU set 1 is 2, and a PSI parameter of the PDU set 2 is 3. When a radio interface is congested or radio interface quality is poor, the base station determines a to-be-transmitted PDU set based on a PSI parameter. It is assumed that a larger value of the PSI parameter indicates a higher importance. When the base station is congested, the base station may transmit only the PDU set 2 and discard the PDU set 1.

In a possible embodiment of this application, a differentiated services code point (DSCP for short in the following embodiments) is used to determine a priority for transmitting a protocol data unit between the first apparatus and the access network device.

For example, the first apparatus is a UPF network element, and the access network device is a base station. Refer to FIG. 1. Two PDU sets sent by the UPF network element to the base station are respectively a PDU set 1 and a PDU set 2. A DSCP 1 of a data packet in the PDU set 1 and a DSCP 2 of a data packet in the PDU set 2 may be determined based on a PSI of the PDU set 1 and a PSI of the PDU set 2. It is assumed that a larger value of the DSCP indicates a higher priority. When the DSCP 1 is greater than the DSCP 2, a router between the UPF network element and the base station preferentially transmits the PDU set 1. Similarly, when the DSCP 1 is less than the DSCP 2, the router preferentially transmits the PDU set 2.

In this application, after determining the first protocol data unit set, the first apparatus determines the differentiated services code point of the first protocol data unit set based on the protocol data unit set importance in the first protocol data unit set. The protocol data unit set importance may be protocol data unit set importance information (PSI) in protocol data unit set information, or may be valid data/payload (payload) of the first protocol data unit set, or may be a data type (payload type/media type) of the first protocol data unit set. Because a value of the differentiated services code point may indicate a transmission priority, after determining the differentiated services code point of the first protocol data unit set, the first apparatus may set a priority of the protocol data unit set.

In a possible embodiment of this application, the method provided in this embodiment of this application further includes: The first apparatus receives first information. Correspondingly, a second apparatus sends the first information to the first apparatus.

The first information is used to determine a correspondence between the protocol data unit set importance and the differentiated services code point. That the first apparatus determines the differentiated services code point of the first protocol data unit set based on the protocol data unit set importance in the first protocol data unit set includes: The first apparatus determines the differentiated services code point of the protocol data unit set based on the protocol data unit set importance and the correspondence.

For example, the protocol data unit set importance in the first protocol data unit set is a PSI in first protocol data unit set information, and the correspondence between the PSI and the DSCP may be represented in a form of mapping table. For example, the correspondence between the PSI and the DSCP may be configured in the first apparatus, for example, the UPF network element, in a form of mapping table.

For example, the UPF network element determines three PDU sets: a PDU set a, a PDU set b, and a PDU set c, and PSIs of the three PDU sets are respectively a PSI a, a PSI b, and a PSI c. As shown in Table 2, Table 2 is a correspondence mapping table provided in this embodiment of this application. A DSCP corresponding to the PSI a is 10, a DSCP corresponding to the PSI b is 15, and a DSCP corresponding to the PSI c is 30.

**Table 2**

| PSI | DSCP |
|---|---|
| PSI a | 10 |
| PSI b | 15 |
| PSI c | 30 |

It should be noted that the correspondence between the PSI and the DSCP may alternatively be represented in another form. This is not limited in embodiments of this application.

In a possible embodiment of this application, the correspondence is related to a priority of a quality of service flow to which the first protocol data unit set belongs.

The priority of the quality of service flow (referred to as a QoS flow in the following embodiments) is a priority for forwarding a data packet in the QoS flow, and may be determined based on a DSCP corresponding to the QoS flow. For example, a larger DSCP indicates a higher priority of the QoS flow corresponding to the DSCP.

Each QoS flow includes one or more PDU sets. For example, there are two QoS flows: a QoS flow 1 and a QoS flow 2. The QoS flow 1 includes two PDU sets: a PDU set 1 and a PDU set 2. The QoS flow 2 includes two PDU sets: a PDU set 3 and a PDU set 4. For a QoS flow, a DSCP corresponding to the QoS flow is determined based on a 5QI corresponding to the QoS flow. For example, a DSCP corresponding to the QoS flow 1 is 36, and a DSCP corresponding to the QoS flow 2 is 46. Therefore, when the PDU set 1 is a first PDU set, a correspondence between a PSI in the PDU set 1 and a DSCP is related to a QoS flow to which the PDU set 1 belongs, namely, the QoS flow 1.

In an example, the DSCP corresponding to the QoS flow is a maximum value of DSCPs of PSIs corresponding to a plurality of PDU sets in the QoS flow.

For example, a DSCP corresponding to the QoS flow 1 is 36, the QoS flow 1 includes the PDU set 1 and the PDU set 2, and PSIs corresponding to the PDU set 1 and the PDU set 2 are respectively a PSI 1 and a PSI 2, where a DSCP corresponding to the PSI 1 is 36, and a DSCP corresponding to the PSI 2 is 34. A DSCP corresponding to the QoS flow 2 is 46, the QoS flow 2 includes the PDU set 3 and the PDU set 4, and PSIs corresponding to the PDU set 3 and the PDU set 4 are respectively a PSI 3 and a PSI 4, where a DSCP corresponding to the PSI 3 is 46, and a DSCP corresponding to the PSI 4 is 42.

In an example, the DSCP corresponding to the QoS flow is a minimum value of DSCPs of PSIs corresponding to a plurality of PDU sets in the QoS flow.

For example, a DSCP corresponding to the QoS flow 1 is 36, the QoS flow 1 includes the PDU set 1 and the PDU set 2, and PSIs corresponding to the PDU set 1 and the PDU set 2 are respectively a PSI 1 and a PSI 2, where a DSCP corresponding to the PSI 1 is 36, and a DSCP corresponding to the PSI 2 is 40. A DSCP corresponding to the QoS flow 2 is 46, the QoS flow 2 includes the PDU set 3 and the PDU set 4, and PSIs corresponding to the PDU set 3 and the PDU set 4 are respectively a PSI 3 and a PSI 4, where a DSCP corresponding to the PSI 3 is 46, and a DSCP corresponding to the PSI 4 is 56.

It should be noted that a range of the DSCPs of the PSIs corresponding to the plurality of PDU sets in the QoS flow falls within a preset range that is based on the DSCP corresponding to the QoS flow. For example, the DSCP corresponding to the QoS flow 1 is 36 as a minimum value, and the preset range is 10. In other words, the DSCPs of the PSIs corresponding to the plurality of PDU sets in the QoS flow 1 do not exceed 46. Alternatively, the DSCP corresponding to the QoS flow 1 is 36 as a maximum value, and the preset range is 10. In other words, the DSCPs of the PSIs corresponding to the plurality of PDU sets in the QoS flow 1 are not less than 26.

It may be understood that the correspondence between the PSI and the DSCP is related to a priority of a quality of service flow to which the first protocol data unit set belongs, or may be related to another form. This is not limited in embodiments of this application.

In a possible implementation of this embodiment of this application, the first apparatus may be the UPF network element shown in FIG. 1, the second apparatus may be the SMF network element shown in FIG. 1, and the first information is N4 information (for example, N4 rules) from the SMF network element.

In this embodiment of this application, that the protocol data unit set importance is the PSI is used as an example. The first information may indicate the correspondence between the PSI and the DSCP in a plurality of forms. For example, if the first information is the DSCP corresponding to the QoS flow, the first apparatus obtains the DSCP corresponding to the QoS flow, and an index corresponding to the DSCP corresponding to the QoS flow includes the correspondence between the PSI and the DSCP. Therefore, the first apparatus may determine the correspondence between the PSI and the DSCP based on the index corresponding to the DSCP corresponding to the QoS flow. For another example, if the first information is directly the correspondence between the PSI and the DSCP, the first apparatus may directly determine the correspondence between the PSI and the DSCP. For another example, if the first information includes a quality of service identifier corresponding to the quality of service flow, the first apparatus may determine a QoS flow by obtaining the quality of service identifier corresponding to the quality of service flow, and determine, in combination with a PSI, a correspondence between PSIs corresponding to different PDU sets and DSCPs.

In a possible embodiment of this application, the first information includes a first differentiated services code point.

The method provided in this embodiment of this application includes: The first apparatus receives the first differentiated services code point. Correspondingly, the second apparatus sends the first differentiated services code point to the first apparatus.

The first differentiated services code point corresponds to a first mapping relationship, and the first mapping relationship indicates the correspondence between the protocol data unit set importance and the differentiated services code point.

The first differentiated services code point is a differentiated services code point of the quality of service flow (QoS flow) to which the first protocol data unit set belongs, and the first differentiated services code point is determined based on a quality of service identifier of the quality of service flow, or is determined based on a quality of service identifier of the quality of service flow, the priority and/or an allocation and retention priority of the quality of service flow.

In a possible implementation of this application, if the quality of service identifier of the quality of service flow is a 5G quality of service identifier (5QI), the first differentiated services code point is determined based on the 5QI, or is determined based on the 5QI, and the priority (the Priority Level) and/or the allocation and retention priority (allocation and retention priority, ARP). The quality of service identifier of the quality of service flow may alternatively be another identifier. This is not limited in embodiments of this application.

For example, the second apparatus is an SMF network element. The SMF network element determines, based on 5QI 2, that a DSCP 1 (the first differentiated services code point) corresponding to the QoS flow 1 is 36. A first mapping relationship corresponding to the DSCP 1 includes a correspondence between PSIs corresponding to a plurality of PDU sets in the QoS flow 1 and DSCPs. For example, the QoS flow 1 includes the PDU set 1 and the PDU set 2, and the PDU set 1 and the PDU set 2 respectively correspond to a correspondence between a PSI 1 and a DSCP and a correspondence between a PSI 2 and a DSCP.

In a possible implementation of this application, the first differentiated services code point is determined based on the 5QI. When the priority and/or the allocation and retention priority are/is provided, the first differentiated services code point may be determined based on the 5QI and the priority, or may be determined based on the 5QI and the allocation and retention priority, or may be determined based on the 5QI, the priority, and the allocation and retention priority.

In an embodiment of this application, the method provided in this embodiment of this application further includes:
The first apparatus identifies protocol data unit set information corresponding to the first protocol data unit set.

The protocol data unit set information corresponding to the protocol data unit set includes but is not limited to one or more of the following parameters: a protocol data unit set sequence number (PDU Set sequence number), an indication of an end protocol data unit of the protocol data unit set (indication of an end PDU of the PDU Set), a protocol data unit sequence number within a protocol data unit set (PDU sequence number within a PDU Set), a protocol data unit set size in bytes (PDU Set size in bytes), and protocol data unit set importance (PDU Set importance, PSI) information.

In an example, the first apparatus identifies the PDU set based on a protocol description (protocol description). In other words, the first apparatus identifies which PDUs are in the PDU set. The protocol description indicates a protocol used by a data packet.

In a possible implementation, the data packet may be transmitted by using a real-time transport protocol (real-time transport protocol, RTP). A protocol header of the RTP protocol is shown in FIG. 8A, and includes a V (Version) field, a P (padding) field, an X (eXtension) field, a CC (CSRC Count) field, an M (Marker) field, a PayloadType (PT), a sequence number, a timestamp field, a synchronization source (synchronization source, SSRC) identifier, and a contributing source (contributing source, CCRS) identifier. The V field occupies two bits, and indicates an RTP version number. The P field occupies one bit, and indicates whether an RTP packet has a padding value. The X field occupies one bit, and indicates whether there is an extension header. The CC field occupies four bits, and records a quantity of CSRS identifiers. A meaning of the M field is determined by a profile, and is generally used to identify a boundary. The payload type field is used to distinguish between audio and video types. The sequence number field is used to quickly locate a lost data packet. The timestamp field occupies four bytes, and is used to record time when the packet is generated. The SSRC identifier is used to distinguish data from different sources. The CSRC identifier indicates sources that contribute data in the RTP packet.

In another possible implementation, information in an RTP extension header may be used for indication. The RTP extension header (RTP extension header) is shown in FIG. 8B, and the RTP extension header includes three parts: a profile, a length, and a header extension. The profile field is used to distinguish different configurations, for example, 0xBE and 0xDE. The length field indicates a quantity of header extensions carried in the extension header. If the length is 4, it indicates that there are four header extensions. The header extension field is extension header information, and is in a unit of 4 bytes. A specific meaning of the header extension field is determined by a profile, for example, a protocol data unit set sequence number (PDU Set sequence number), an indication of an end protocol data unit of the protocol data unit set (indication of an end PDU of the PDU Set), a protocol data unit sequence number within a protocol data unit set (PDU sequence number within a PDU Set), a protocol data unit set size in bytes (PDU Set size in bytes), and a protocol data unit set importance (PDU Set importance, PSI).

In an embodiment of this application, the first information includes a second mapping relationship.

The method provided in this embodiment of this application includes: The first apparatus receives the second mapping relationship. Correspondingly, the second apparatus sends the second mapping relationship to the first apparatus.

The second mapping relationship indicates a correspondence between a protocol data unit set importance in the quality of service flow to which the first protocol data unit set belongs and a differentiated services code point.

The second mapping relationship is determined based on the quality of service identifier of the quality of service flow and the protocol data unit set importance in the first protocol data unit set. Alternatively, the second mapping relationship is determined based on the quality of service identifier of the quality of service flow, the protocol data unit set importance in the first protocol data unit set, and the priority and/or the allocation and retention priority of the quality of service flow.

The protocol data unit set importance in the first protocol data unit set may be the PSI, or may be the valid data/payload (payload), or may be the data type (payload type/media type). For example, the second mapping relationship is determined based on the quality of service identifier of the quality of service flow and the PSI, or is determined based on the quality of service identifier of the quality of service flow and the valid data/payload, or is determined based on the quality of service identifier of the quality of service flow and the data type.

Optionally, a factor for determining the second mapping relationship may further include the priority and/or the allocation and retention priority of the quality of service flow.

For example, the protocol data unit set importance is a PSI. In a possible implementation of this application, the second mapping relationship is determined based on the 5QI and the PSI, or the second mapping relationship is determined based on the 5QI, the PSI, and the priority and/or the allocation and retention priority.

For example, the second apparatus is an SMF network element. The SMF network element determines a transmission priority of a QoS flow based on the 5QI, and determines a correspondence between a PSI in the QoS flow and a DSCP. For example, the SMF network element determines a transmission priority of the QoS flow 1 based on 5QI 2, and determines a correspondence between a plurality of PSIs in the QoS flow 1 and DSCPs. For example, the QoS flow 1 includes a PSI 1, a PSI 2, a PSI 3, and a PSI 4, which respectively correspond to a DSCP 1, a DSCP 2, a DSCP 3, and a DSCP 4.

For example, the protocol data unit set importance is valid data. In another possible implementation of this application, the second mapping relationship is determined based on a 5QI and the valid data/payload, or the second mapping relationship is determined based on a 5QI, the valid data/payload, and the priority and/or the allocation and retention priority.

For example, the protocol data unit set importance is a data type. In another possible implementation of this application, the second mapping relationship is determined based on a 5QI and the data type, or the second mapping relationship is determined based on a 5QI, the data type, and the priority and/or the allocation and retention priority.

In an embodiment of this application, the first information includes a quality of service identifier of a quality of service flow to which the first protocol data unit set belongs.

The method provided in this embodiment of this application includes: The first apparatus receives the quality of service identifier of the quality of service flow to which the first protocol data unit set belongs. Correspondingly, the second apparatus sends, to the first apparatus, the quality of service identifier of the quality of service flow to which the first protocol data unit set belongs.

The method provided in this embodiment of this application further includes: The first apparatus determines the correspondence based on the quality of service identifier.

It may be understood that, in the foregoing implementation in which the first apparatus receives the second mapping relationship, the second apparatus determines the correspondence between the protocol data unit set importance and the differentiated services code point based on the quality of service identifier of the quality of service flow and the protocol data unit set importance. However, in an embodiment in which the first information includes the quality of service identifier of the quality of service flow to which the first protocol data unit set belongs, the first apparatus determines the correspondence between the protocol data unit set importance and the differentiated services code point based on the quality of service identifier of the quality of service flow and the protocol data unit set importance.

Optionally, the first information further includes the priority and/or an allocation and retention priority.

In a possible implementation of this application, the first information includes a 5QI, and when the priority and/or the allocation and retention priority are/is provided, the first information includes the 5QI and the priority; or the first information includes the 5QI and the allocation and retention priority; or the first information includes the 5QI, the priority, and the allocation and retention priority.

In an embodiment of this application, the first information includes a third mapping relationship.

The method provided in this embodiment of this application includes: The first apparatus receives the third mapping relationship. Correspondingly, the second apparatus sends the third mapping relationship to the first apparatus.

The third mapping relationship indicates the correspondence between the protocol data unit set importance in the quality of service flow to which the first protocol data unit set belongs and the differentiated services code point. The third mapping relationship is determined based on the protocol data unit set importance in the first protocol data unit set and/or the quality of service identifier of the quality of service flow.

For example, the quality of service identifier of the quality of service flow may be the 5QI.

In an embodiment of this application, that the first apparatus determines the differentiated services code point of the first protocol data unit set further includes: The first apparatus marks the differentiated services code point in an IP packet header of a data packet in the first protocol data unit set, and sends the first protocol data unit set to the access network device.

For example, the first apparatus is a UPF network element, and the access network device is a base station. That the UPF network element determines the DSCP corresponding to the first protocol data unit set further includes: The UPF network element marks the DSCP in an IP packet header of a data packet, received from the AS, in the first protocol data unit set, and sends the data packet to the base station through a router. The router determines a transmission priority of the data packet based on a DSCP value.

In an embodiment of this application, the first information is determined based on a policy and charging control rule.

The policy and charging control rule (policy and charging control rule, PCC rule) is generated by the PCF network element, and the PCC rule includes information about a protocol description (protocol description) for sending and indication information, namely, indication information of a DSCP marking based on a PDU set.

The method provided in this embodiment of this application further includes: The first apparatus receives the indication information. The indication information indicates the first apparatus to perform differentiated services code point marking at a granularity of a protocol data unit set.

In a possible embodiment, the first information includes the first differentiated services code point and the indication information; or the first information includes the second mapping relationship and the indication information; or the first information includes the quality of service identifier of the quality of service flow to which the first protocol data unit set belongs and the indication information; or the first information includes the third mapping relationship and the indication information.

An embodiment of this application provides a communication method. The method includes: A second apparatus sends indication information and a differentiated services code point of a quality of service flow to a first apparatus; or sends indication information and a quality of service identifier or a correspondence between a protocol data unit set importance and a differentiated services code point. The indication information indicates the first apparatus to perform differentiated services code point marking on a data packet at a granularity of a protocol data unit set.

In a possible implementation of this application, the second apparatus sends the indication information and a first differentiated services code point to the first apparatus. The first differentiated services code point corresponds to a first mapping relationship, and the first mapping relationship indicates the correspondence between the protocol data unit set importance and the differentiated services code point. For a specific implementation, refer to the foregoing embodiment. Details are not described herein again.

In another possible implementation of this application, the second apparatus sends the indication information and a second mapping relationship to the first apparatus. The second mapping relationship indicates a correspondence between a protocol data unit set importance in a quality of service flow to which a first protocol data unit set belongs and a differentiated services code point. For a specific implementation, refer to the foregoing embodiment. Details are not described herein again.

In another possible implementation of this application, the second apparatus sends the indication information and a quality of service identifier of the quality of service flow to the first apparatus. For example, the quality of service identifier of the quality of service flow is a 5QI.

In an embodiment of this application, the method provided in this embodiment of this application further includes: The second apparatus obtains a policy and charging control rule. The policy and charging control rule is used to determine the indication information, the quality of service identifier, and/or the correspondence between the protocol data unit set importance and the differentiated services code point.

In an embodiment of this application, when the second apparatus sends the second mapping relationship to the first apparatus, the method provided in this embodiment of this application further includes: The second apparatus obtains a protocol data unit set identification method. The protocol data unit set identification method is used to identify the first protocol data unit set. In a possible implementation, the second apparatus obtains a protocol description.

For the protocol data unit set identification method, refer to the foregoing embodiment. Details are not described herein again.

In an embodiment of this application, when the second apparatus sends a third mapping relationship to the first apparatus, the method provided in this embodiment of this application further includes:
The second apparatus sends quality of service configuration information (QoS profile) to an access network device. Correspondingly, the access network device receives the quality of service configuration information from the second apparatus.

The quality of service configuration information indicates a quality of service parameter (QoS parameter).

In an embodiment of this application, after the second apparatus sends the quality of service configuration information to the access network device, the method provided in this embodiment of this application further includes:
The second apparatus receives feedback information from the access network device. Correspondingly, the access network device sends the feedback information to the second apparatus. The feedback information indicates that the access network device supports service processing of a protocol data unit set.

For example, the protocol data unit set importance is a PSI. The second apparatus first determines, based on a correspondence between a PSI and a DSCP, that the first apparatus determines the DSCP corresponding to the PSI, sends the correspondence between a PSI and a DSCP to the first apparatus, and sends the quality of service configuration information to the access network device.

The access network device may support PDU set-based transmission, or may not support PDU set-based transmission. After receiving the quality of service configuration information from the second apparatus, the access network device does not perform feedback when determining that PDU set-based transmission is not supported, and the second apparatus determines that the first apparatus determines the DSCP based on the quality of service identifier of the quality of service flow. When the access network device determines that the access network device supports PDU set-based transmission, the access network device sends feedback information to the second apparatus, where the feedback information is a support indication. In this case, the second apparatus determines, based on the feedback information, that the first apparatus determines, based on the correspondence between the PSI and the DSCP, the DSCP corresponding to the PSI.

For example, the second apparatus is an SMF network element, and the access network device is a base station. The SMF network element sends a QoS profile to the base station. When the base station supports PDU set-based transmission, after receiving the QoS profile, the base station sends the support indication to the SMF network element, and the SMF network element determines that the UPF network element determines, based on the correspondence between the PSI and the DSCP, the DSCP corresponding to the PSI. When the base station does not support PDU set-based transmission, after receiving the QoS profile, the base station does not respond. In this case, the SMF network element determines that the UPF network element determines the DSCP based on the 5QI.

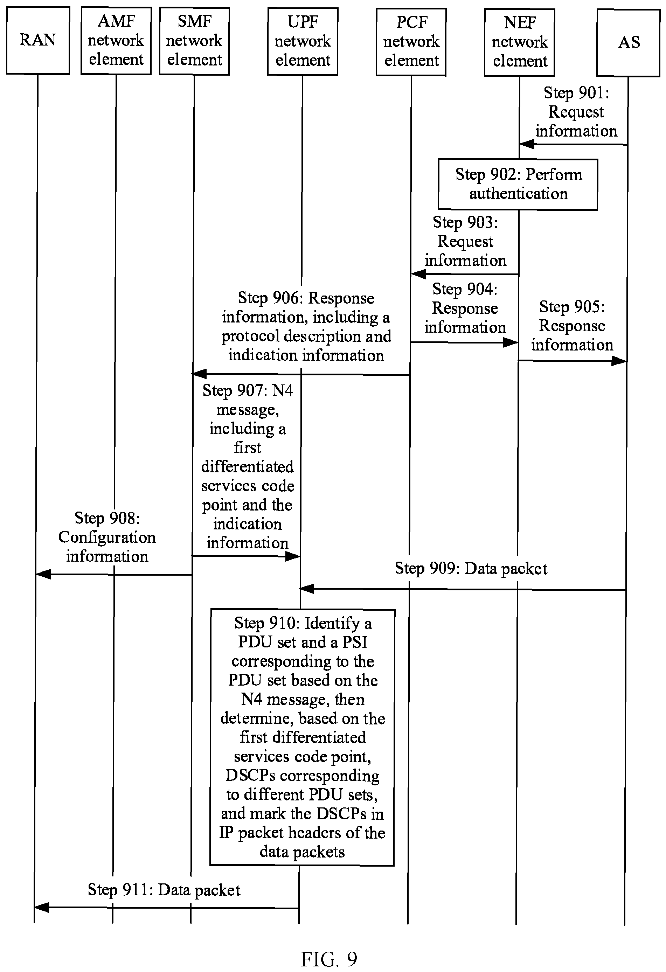

The following describes a process of determining DSCPs corresponding to different PDU sets by using an example in which the first apparatus is a UPF network element, the second apparatus is an SMF network element, and the protocol data unit set importance is a PSI. FIG. 9 is a schematic flowchart of a communication method according to an embodiment of this application. The method includes the following steps.

Step 901: An AS sends request information to a NEF network element. Correspondingly, the NEF network element obtains the request information from the AS. The request information includes a protocol description (protocol description).

In an example, the AF network element initiates, to the NEF network element, a (Nnef_AFsessionWithQoS) service for requesting a specific QoS for an AF session, for example, a Nnef_AFsessionWithQoS_Create service operation in the Nnef_ AFsessionWithQoS service. The Nnef_ AFsessionWithQoS service allows the AS to request a network to provide a specific QoS for the AS session. The AS may provide an identifier of the AS, a terminal IP address, an application data flow description, a QoS reference number, and the like, and the NEF network element responds to the AS.

For example, the AS sends the request information to the NEF network element by using a Nnef_AFsessionWithQoS_Create request.

Step 902: The NEF network element performs authentication (authorization) on the request information.

Step 903: The NEF network element sends the request information to a PCF network element. Correspondingly, the PCF network element obtains the request information from the PCF network element.

In an example, after successfully authenticating the request information, the NEF network element initiates a policy authorization (Npcf_PolicyAuthorization) service to the PCF network element. For example, for a policy authorization-create (Npcf_PolicyAuthorization_Create) service operation in the Npcf_Policy Authorization service, the NEF network element invokes the Npcf_PolicyAuthorization_Create service operation from the PCF network element, allows the PCF network element to create an application session based on an information authorization request provided by the NEF network element, and may install a policy corresponding to the NEF network element. The PCF network element responds whether the policy is successfully authorized. If the authorization is successful, the PCF network element includes an application session ID for identifying service information that can be authorized for subsequent service operations of a same application session.

For example, the NEF network element sends the request information that passes the authentication to the PCF network element by using a Npcf_PolicyAuthorization_Create request.

Step 904: The PCF network element generates response information based on the request information, and sends the response information to the NEF network element. Correspondingly, the NEF network element obtains the response information from the PCF network element.

For example, the PCF network element sends the response information to the NEF network element by using a Npcf_PolicyAuthorization_Create resp.

Step 905: The NEF network element sends the response information to the AS. Correspondingly, the AS obtains the response information from the NEF network element.

Step 906: The PCF network element sends the response information to the SMF network element. Correspondingly, the SMF network element obtains the response information from the PCF network element.

The response information is a PCC rule, and the PCC rule includes information about a protocol description.

Optionally, the PCC rule further includes indication information, and the indication information is indication information of a DSCP marking based on a PDU set.

In an implementation, the PCF network element selects an SMF network element serving a PDU session, and the PCF network element initiates an SM policy association establishment procedure to the SMF network element, establishes an SM policy association (SM Policy Association), and downloads the PCC rule.

Step 907: The SMF network element sends an N4 message to the UPF network element. Correspondingly, the UPF network element obtains the N4 message from the SMF network element.

The N4 message includes a first differentiated services code point. The first differentiated services code point is determined based on a 5G quality of service identifier (5QI).

Optionally, the N4 message further includes indication information indicating the UPF network element to perform differentiated services code point marking at a granularity of a PDU set.

Optionally, the first differentiated services code point is determined based on a 5G quality of service identifier (5QI), a priority (the Priority Level), and/or an allocation and retention priority (allocation and retention priority).

Step 908: The SMF network element sends configuration information (QoS profile) to a RAN. Correspondingly, the RAN obtains the configuration information (QoS profile) from the SMF network element.

For example, the SMF network element sends an N2 SM message to the RAN, where the message includes the QoS profile.

Step 909: The AS sends a data packet to the UPF network element. Correspondingly, the UPF network element receives the data packet from the AS.

For example, the UPF network element receives a downlink data packet from the AS.

Step 910: The UPF network element identifies, based on the N4 message, a PDU set and a PSI corresponding to the PDU set. The UPF network element then determines, based on the first differentiated services code point, DSCPs corresponding to different PDU sets, and marks the DSCPs in IP packet headers of the data packets.

In a possible implementation, a relationship between PSIs and DSCPs that correspond to different PDU sets is configured on the UPF network element in a form of a mapping table.

Step 911: The UPF network element sends the data packet to the RAN. Correspondingly, the RAN obtains the data packet from the UPF network element.

For example, a router sends, to a base station, data packets that carry DSCPs corresponding to PSIs corresponding to different PDU sets. The router determines transmission priorities of the data packets based on the DSCPs.

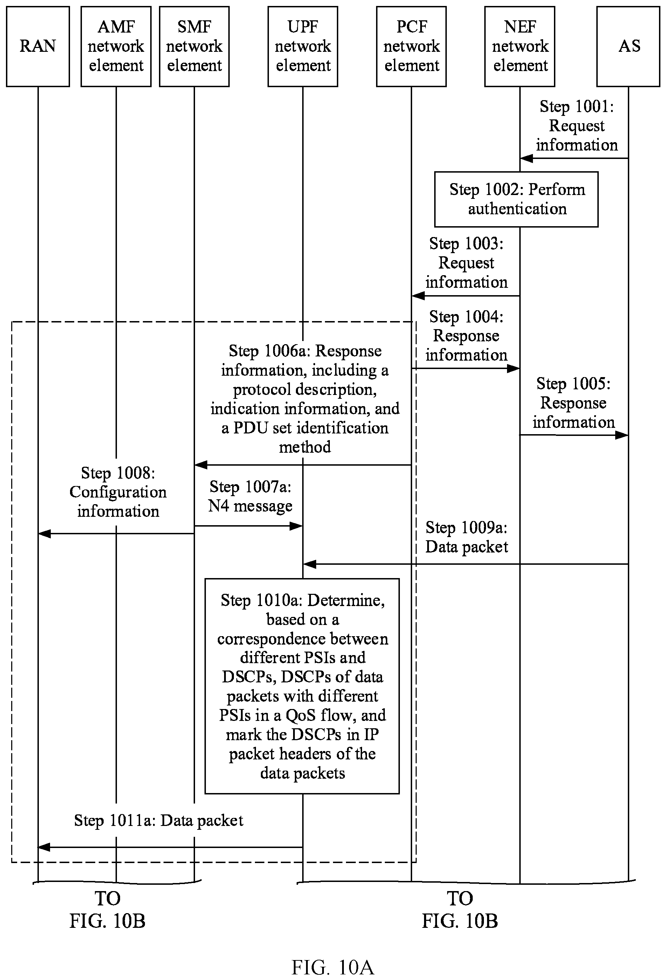

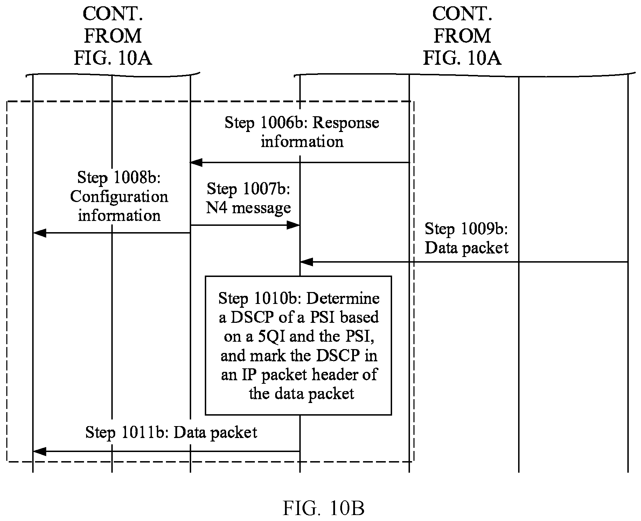

The following describes, by using an example in which the first apparatus is a UPF network element, the second apparatus is an SMF network element, and a protocol data unit set importance is a PSI, a schematic flowchart of another communication method according to an embodiment of this application shown in FIG. 10A and FIG. 10B. A difference between the method and the embodiment shown in FIG. 9 lies in that, in the embodiment shown in FIG. 9, the UPF network element determines, based on a mapping relationship of the SMF network element and a mapping relationship of the UPF network element, DSCPs of PSIs corresponding to different PDU sets in different quality of service flows. However, in the embodiment shown in FIG. 10A and FIG. 10B, only one layer of mapping relationship is required, to be specific, a value of a DSCP corresponding to the PSI corresponding to the PDU set needs to be determined based on a quality of service identifier and the PSI. The method includes the following steps.

In this embodiment provided in this application, step 1001 to step 1005 are the same as step 901 to step 905 described in the foregoing embodiment, and details are not described herein again.

In an implementation of this embodiment of this application, the method includes:
Step 1006a: The PCF network element sends response information to the SMF network element. Correspondingly, the SMF network element obtains the response information from the PCF network element.

The response information is a PCC rule. A difference from step 906 in the foregoing embodiment is that, in addition to information about a protocol description (protocol description) for sending, the PCC rule may further include a method for identifying a PDU set.

The method for identifying a PDU set may be indicated by using the protocol description information, or may be identified in another implementation. This is not limited in embodiments of this application.

Optionally, the PCC rule further includes indication information.

For example, the PDU set may be identified by using information corresponding to the PDU set. The information corresponding to the PDU set includes but is not limited to one or more of the following: a PDU set sequence number (PDU Set sequence number), an indication of an end PDU of the PDU set (indication of an end PDU of the PDU Set), a PDU sequence number within a PDU set (PDU sequence number within a PDU Set), a PDU size in bytes (PDU Set size in bytes), and a PDU set importance (PDU Set importance, PSI).

For example, the PCF network element initiates an SM policy association establishment procedure to the SMF network element, to establish an SM policy association (SM Policy Association).

Step 1007a: The SMF network element sends an N4 message to the UPF network element. Correspondingly, the UPF network element obtains the N4 message from the SMF network element.

The N4 message includes a correspondence that is between different PSIs in a quality of service flow and DSCPs and that is determined by the SMF network element based on the 5QI and the PSI.

Optionally, the PSI may alternatively be valid data (payload) or a data type (payload type/media type). For example, the N4 message includes a correspondence that is between different valid data in the quality of service flow and a DSCP and that is determined by the SMF network element based on the 5QI and the valid data, or the N4 message includes a correspondence that is between different data types in the quality of service flow and DSCPs and that is determined by the SMF network element based on the 5QI and the data type.

Optionally, the N4 message further includes indication information.

Optionally, the correspondence that is between different PSIs in the quality of service flow and DSCPs and that is included in the N4 message may alternatively be determined based on the 5QI, the PSI, a priority, and/or an allocation and retention priority.

For example, the correspondence that is between different PSIs in the quality of service flow and DSCPs and that is included in the N4 message may alternatively be determined based on the 5QI, the PSI, the priority, and the allocation and retention priority; or may be determined based on the 5QI, the PSI, and the priority; or may be determined based on the 5QI, the PSI, and the allocation and retention priority.

Optionally, the correspondence that is between different valid data in the quality of service flow and a DSCP and that is included in the N4 message may alternatively be determined based on the 5QI, the valid data, the priority, and the allocation and retention priority; or may be determined based on the 5QI, the valid data, and the priority; or may be determined based on the 5QI, the valid data, and the allocation and retention priority. Alternatively, the correspondence that is between different data types in the quality of service flow and DSCPs and that is included in the N4 message may alternatively be determined based on the 5QI, the data type, the priority, and the allocation and retention priority; or may be determined based on the 5QI, the data type, and the priority; or may be determined based on the 5QI, the data type, and the allocation and retention priority.

In this embodiment provided in this application, step 1008a and step 1009a are the same as step 908 and step 909 described in the foregoing embodiment, and details are not described herein again.

Step 1010a: The UPF network element determines, based on the correspondence between different PSIs and DSCPs, DSCPs of data packets with different PSIs in the QoS flow, and marks the DSCPs in IP packet headers of the data packets.

Step 1011a: The UPF network element sends the data packet to a RAN. Correspondingly, the RAN obtains the data packet from the UPF network element.

In another implementation of this embodiment of this application, the method includes the following steps.

Step 1006b: The PCF network element sends response information to the SMF network element. Correspondingly, the SMF network element obtains the response information from the PCF network element.

The response information is a PCC rule, and the PCC rule includes information about a protocol description (protocol description) for sending.

Optionally, the PCC rule further includes indication information, and the indication information is indication information of a DSCP marking based on a PDU set.

Step 1007b: The SMF network element sends an N4 message to the UPF network element. Correspondingly, the UPF network element obtains the N4 message from the SMF network element.

The N4 message includes the 5QI.

Optionally, the N4 message further includes indication information.

In the embodiment provided in this application, step 1008b and step 1009b are the same as step 908 and step 909 described in the foregoing embodiment, and details are not described herein again.

Step 1010b: The UPF network element determines a DSCP of the PSI based on the 5QI and the PSI, and marks the DSCP in an IP packet header of the data packet.

The PSI may alternatively be valid data or the data type.

Step 1010b: The UPF network element sends the data packet to the RAN. Correspondingly, the RAN obtains the data packet from the UPF network element.

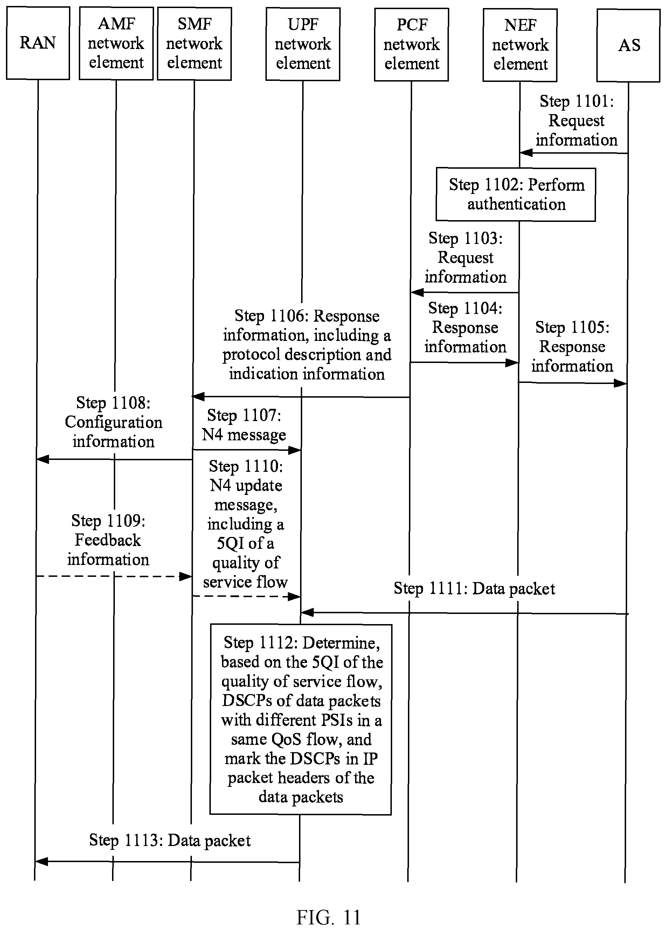

The following describes, by using an example in which the first apparatus is a UPF network element, the second apparatus is an SMF network element, and a protocol data unit set importance is a PSI, a schematic flowchart of another communication method according to an embodiment of this application shown in FIG. 11. In the embodiment shown in FIG. 11, the SMF network element determines or indicates, based on a QoS processing type, the UPF network element to determine a DSCP value. The method includes the following steps.

In this embodiment provided in this application, step 1101 to step 1106 are the same as step 901 to step 906 described in the foregoing embodiment, and details are not described herein again.

Step 1107: The SMF network element sends N4 information to the UPF network element. Correspondingly, the UPF network element obtains the N4 message from the SMF network element.

The N4 message includes a correspondence between PSIs corresponding to different PDU sets in aQoS flow and DSCPs. In other words, the SMF network element indicates the UPF network element to determine DSCPs based on the correspondence between PSIs and the DSCPs.

Step 1108: The SMF network element sends configuration information (QoS profile) to a RAN. Correspondingly, the RAN obtains the configuration information (QoS profile) from the SMF network element.

For example, the SMF network element sends an N2 SM message to the RAN, where the message includes the QoS profile.

Optionally, step 1109: The RAN sends feedback information to the SMF network element. Correspondingly, the SMF network element obtains the feedback information from the RAN.

The feedback information is used to feed back indication information indicating that the PDU set is supported, for example, a support indication. The SMF network element may determine that the UPF network element determines the DSCP of the PSI based on the correspondence between the PSI and the DSCP, or may determine the DSCP based on the 5QI. When the RAN supports transmission of the PDU set, the SMF network element receives the feedback information from the RAN. In this case, the SMF network element determines that the UPF network element determines the DSCP of the PSI based on the correspondence between the PSI and the DSCP. When the RAN supports transmission of the PDU set, the SMF network element fails to receive the feedback information from the RAN. In this case, the SMF network element determines that the UPF network element determines the DSCP based on the 5QI.

After the SMF network element obtains the feedback information from the RAN, the method provided in this embodiment of this application further includes the following steps.

Step 1110: The SMF network element sends an N4 update message to the UPF network element. Correspondingly, the UPF network element obtains the N4 update message from the SMF network element.

The N4 update message is used to determine that the UPF network element determines the DSCP of the PSI based on the correspondence between the PSI and the DSCP.

Step 1111: The AS sends a data packet to the UPF network element. Correspondingly, the UPF network element receives the data packet from the AS.

For example, the UPF network element receives a downlink data packet from the application server.

Step 1112: The UPF network element determines, based on a 5QI of a quality of service flow sent by the SMF network element, DSCPs of data packets with different PSIs in a same QoS flow, and marks the DSCPs in IP packet headers of the data packets.

Step 1113: The UPF network element sends the data packet to the RAN. Correspondingly, the RAN obtains the data packet from the UPF network element.

The foregoing mainly describes the solutions in embodiments of this application from a perspective of interaction between network elements. It can be understood that, to implement the foregoing functions, the network elements such as the first apparatus and the second apparatus include corresponding structures and/or software modules for implementing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first apparatus and the second apparatus each may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of software functional unit. It should be noted that, in embodiments of this application, division into the units is an example, and is merely a logical function division. In actual implementation, another division manner may be used.

The foregoing describes the method in embodiments of this application with reference to FIG. 7. The following describes a communication apparatus that is provided in embodiments of this application and that performs the foregoing method. A person skilled in the art may understand that the method and the apparatus may be mutually combined and referenced. The communication apparatus provided in embodiments of this application may perform the steps performed by the first apparatus and the second apparatus in the communication method shown in FIG. 7.

The foregoing describes the method in embodiments of this application with reference to FIG. 7. The following describes a communication apparatus that is provided in embodiments of this application and that performs the foregoing method. A person skilled in the art may understand that the method and the apparatus may be mutually combined and referenced. The communication apparatus provided in embodiments of this application includes one or more units configured to implement the foregoing communication method.

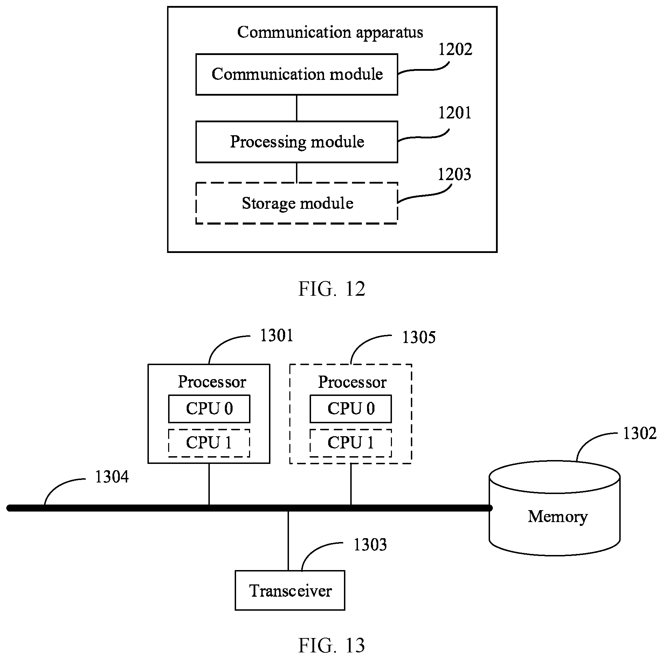

When an integrated unit is used, FIG. 12 is a diagram of a structure of a communication apparatus according to an embodiment of this application. The communication apparatus may include a communication module 1202 and a processing module 1201.

In an optional implementation, the communication apparatus may further include a storage module 1203, configured to store program code and data of the communication apparatus.

In an example, the communication apparatus is a first apparatus, or is a chip used in a first apparatus. In this case, the processing module 1201 is configured to support the communication apparatus in performing the steps in the foregoing embodiment. The communication module 1202 is configured to support the communication apparatus in performing a sending action performed by the first apparatus in the steps in the foregoing embodiment.

In another example, the communication apparatus is a second apparatus, or is a chip used in a second apparatus. In this case, the processing module 1201 is configured to support the communication apparatus in performing the steps in the foregoing embodiment. The communication module 1202 is configured to support the communication apparatus in performing a sending action performed by the second apparatus in the steps in the foregoing embodiment.

The processing module 1201 may be a processor or controller, for example, may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described in combination with content disclosed in this application. Alternatively, the processor may be a combination of processors implementing a computing function, for example, a combination of one or more microprocessors, or a combination of the digital signal processor and a microprocessor. The communication module may be a transceiver, a transceiver circuit, a communication interface, or the like. The storage module may be a memory.

When the processing module 1201 is a processor 1301 or a processor 1305, the communication module 1202 is a communication interface 1303, and the storage module 1203 is a memory 1302, the communication apparatus in this application may be a communication device shown in FIG. 13.

FIG. 13 is a diagram of a hardware structure of a communication device according to an embodiment of this application. For hardware structures of a terminal device and a network device in embodiments of this application, refer to the structure shown in FIG. 13. The communication device includes a processor 1301, a communication line 1304, and at least one transceiver (in FIG. 13, only an example in which a transceiver 1303 is included is used for description).

The processor 1301 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1304 may include a channel for transmitting information between the foregoing components.

The transceiver 1303 is any apparatus like a transceiver, and is configured to communicate with another device or a communication network, for example, Ethernet, a radio access network (radio access network, RAN), or a wireless local area network (wireless local area network, WLAN).

Optionally, the communication device may further include a memory 1302.

The memory 1302 may be a read-only memory (read-only memory, ROM) or another type of static storage device capable of storing static information and instructions, a random access memory (random access memory, RAM) or another type of dynamic storage device capable of storing information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium capable of carrying or storing expected program code in a form of instructions or data structures capable of being accessed by a computer, but is not limited thereto. The memory 1302 may exist independently, and is connected to the processor 1301 through a communication line 1304. Alternatively, the memory 1302 may be integrated with the processor 1301.

The memory 1302 is configured to store computer-executable instructions for performing the solutions in this application, and the computer-executable instructions are executed under control of the processor 1301. The processor 1301 is configured to execute the computer-executable instructions stored in the memory 1302, to implement a policy control method provided in the following embodiments of this application.

Optionally, the computer-executable instructions in this embodiment of this application may also be referred to as application program code. This is not specifically limited in embodiments of this application.

In specific implementation, in an embodiment, the processor 1301 may include one or more CPUs such as a CPU 0 and a CPU 1 in FIG. 13.

During specific implementation, in an embodiment, the communication device may include a plurality of processors, for example, a processor 1301 and a processor 1305 in FIG. 13. Each of the processors may be a single-core (single-CPU) processor, or may be a multi-core (multi-CPU) processor. The processor herein may be one or more devices, circuits, and/or processing cores configured to process data (for example, computer program instructions).

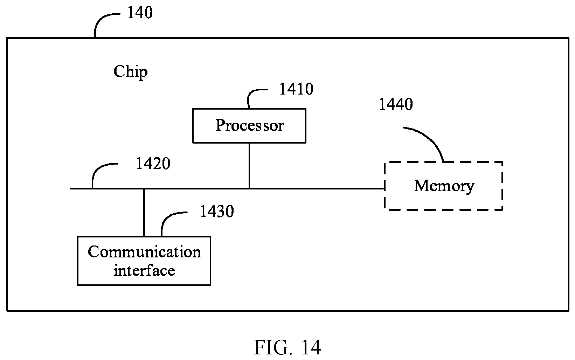

FIG. 14 is a diagram of a structure of a chip 140 according to an embodiment of this application. The chip 140 includes one or two or more (including two) processors 1410 and a communication interface 1430.

Optionally, the chip 1400 further includes a memory 1440, and the memory 1440 may include a read-only memory and a random access memory and provide operation instructions and data for the processor 1410. A part of the memory 1440 may further include a non-volatile random access memory (non-volatile random access memory, NVRAM).

In some implementations, the memory 1440 stores the following elements, an execution module or a data structure, a subset thereof, or an extended set thereof.

In this embodiment of this application, a corresponding operation is performed by invoking the operation instructions stored in the memory 1440 (the operation instructions may be stored in an operating system).

The processor 1410 controls a processing operation of either of a first terminal and a base station, and the processor 1410 may also be referred to as a central processing unit (central processing unit, CPU).

The memory 1440 may include a read-only memory and a random access memory, and provide instructions and data to the processor 1410. A part of the memory 1440 may further include an NVRAM. For example, during application, the memory 1440, the communication interface 1430, and the memory 1440 are coupled together through a bus system 1420. In addition to a data bus, the bus system 1420 may further include a power bus, a control bus, a status signal bus, and the like. However, for clear description, various buses are marked as the bus system 1420 in FIG. 14.

The methods disclosed in the foregoing embodiments of this application may be applied to the processor 1410, or may be implemented by the processor 1410. The processor 1410 may be an integrated circuit chip and has a signal processing capability. In an implementation process, the steps in the foregoing methods can be performed by using a hardware integrated logic circuit in the processor 1410, or by using instructions in a form of software. The processor 1410 may be a general-purpose processor, a digital signal processor (digital signal processor, DSP), an ASIC, a field-programmable gate array (field-programmable gate array, FPGA) or another programmable logic device, a discrete gate, a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, a register, or the like. The storage medium is located in the memory 1440, and the processor 1410 reads information in the memory 1440 and completes the steps in the foregoing methods in combination with hardware of the processor.

The communication unit may be a communication interface of the apparatus, and is configured to receive a signal from another apparatus. For example, when the apparatus is implemented as a chip, the communication unit is a communication interface used by the chip to receive a signal from another chip or apparatus or send a signal.

In a possible implementation, the communication interface 1430 is configured to perform receiving and sending steps performed by the first apparatus in the embodiment shown in FIG. 7. The processor 1410 is configured to perform the processing steps of the first apparatus in the embodiment shown in FIG. 7.

In another possible implementation, the communication interface 1430 is configured to perform receiving and sending steps performed by the second apparatus in the embodiment shown in FIG. 7. The processor 1410 is configured to perform the processing steps of the second apparatus in the embodiment shown in FIG. 7.

According to an aspect, a computer-readable storage medium is provided. The computer-readable storage medium stores instructions. When the instructions are run, functions performed by the second apparatus in FIG. 7 are implemented.

According to an aspect, a computer-readable storage medium is provided. The computer-readable storage medium stores instructions. When the instructions are run, functions performed by the first apparatus in FIG. 7 are implemented.

According to an aspect, a computer program product including instructions is provided. The computer program product includes the instructions, and when the instructions are run, functions performed by the second apparatus in FIG. 7 are implemented.

According to an aspect, a computer program product including instructions is provided. The computer program product includes the instructions, and when the instructions are run, functions performed by the first apparatus in FIG. 7 are implemented.

According to an aspect, a chip is provided. The chip is used in a first apparatus, and the chip includes at least one processor and a communication interface. The communication interface is coupled to the at least one processor. The processor is configured to run instructions, to implement the functions performed by the first apparatus in FIG. 7.

According to an aspect, a chip is provided. The chip is used in a data analysis network element. The chip includes at least one processor and a communication interface. The communication interface is coupled to the at least one processor. The processor is configured to run instructions, to implement the functions performed by the second apparatus in FIG. 7.

This application provides a communication system. The communication system includes a first apparatus and a target device, and the target device is a first terminal or a second apparatus. The first apparatus is configured to perform the functions performed by the first apparatus in FIG. 7, and the second apparatus is configured to perform the functions performed by the data analysis network element in FIG. 7.

An embodiment of this application further provides a computer-readable storage medium. The computer-readable storage medium stores a computer program. When the computer program is executed by a computer, the computer is enabled to implement the foregoing method embodiments.

An embodiment of this application further provides a computer program product including instructions. When the instructions are executed by a computer, the computer is enabled to implement the foregoing method embodiments.

For descriptions and beneficial effects of related content of any one of the communication apparatuses provided above, refer to corresponding method embodiments provided above. Details are not described herein again.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

It should be understood that, the processor mentioned in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

All or some of the foregoing embodiments may be implemented by using software, hardware, firmware, or any combination thereof. When software is used to implement the embodiments, all or a part of the embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In the several embodiments provided in this application, it should be understood that the disclosed system, apparatus, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving, by a first apparatus, a first data packet;
determining, by the first apparatus, a first protocol data unit set to which the first data packet belongs; and
determining, by the first apparatus, a differentiated services code point of the first data packet based on a protocol data unit set importance in the first protocol data unit set.

2. The method according to claim 1, wherein the differentiated services code point is used to determine a priority for transmitting the first protocol data unit set between the first apparatus and an access network device.

3. The method according to claim 1 or 2, wherein the method further comprises:
receiving, by the first apparatus, first information, wherein the first information is used to determine a correspondence between a protocol data unit set importance and a differentiated services code point; and
determining, by the first apparatus, the differentiated services code point of the first data packet based on the protocol data unit set importance in the first protocol data unit set comprises:
determining, by the first apparatus, the differentiated services code point of the first data packet based on the protocol data unit set importance and the correspondence.

4. The method according to claim 3, wherein the correspondence is related to a priority of a quality of service flow to which the first protocol data unit set belongs.

5. The method according to claim 3 or 4, wherein the first information comprises a first differentiated services code point; and
the first differentiated services code point corresponds to a first mapping relationship, and the first mapping relationship indicates the correspondence between the protocol data unit set importance and the differentiated services code point.

6. The method according to claim 5, wherein the first differentiated services code point is a differentiated services code point of the quality of service flow to which the first protocol data unit set belongs, and the first differentiated services code point is determined based on a quality of service identifier of the quality of service flow, or is determined based on a quality of service identifier of the quality of service flow and the priority and/or an allocation and retention priority of the quality of service flow.

7. The method according to any one of claims 1 to 6, wherein the method comprises:
identifying, by the first apparatus, protocol data unit set information corresponding to the first protocol data unit set, wherein the protocol data unit set information comprises one or more of a protocol data unit set sequence number, an indication of an end protocol data unit of a protocol data unit set, a protocol data unit sequence number within a protocol data unit set, a protocol data unit set size in bytes, and a protocol data unit set importance.

8. The method according to claim 3 or 4, wherein the first information comprises a second mapping relationship, and
the second mapping relationship indicates a correspondence between a protocol data unit set importance in the quality of service flow to which the first protocol data unit set belongs and a differentiated services code point.

9. The method according to claim 8, wherein the second mapping relationship is determined based on a quality of service identifier of the quality of service flow and the protocol data unit set importance in the first protocol data unit set, or the second mapping relationship is determined based on a quality of service identifier of the quality of service flow, the protocol data unit set importance in the first protocol data unit set, and the priority and/or an allocation and retention priority of the quality of service flow; or
the second mapping relationship is determined based on a quality of service identifier of the quality of service flow, the protocol data unit set importance in the first protocol data unit set, and valid data of the first data packet, or the second mapping relationship is determined based on a quality of service identifier of the quality of service flow, the protocol data unit set importance in the first protocol data unit set, valid data of the first data packet, and the priority and/or an allocation and retention priority of the quality of service flow.

10. The method according to claim 3 or 4, wherein the first information comprises a quality of service identifier of the quality of service flow to which the first protocol data unit set belongs; and
the method further comprises:
determining, by the first apparatus, the correspondence based on the quality of service identifier.

11. The method according to claim 10, wherein the first information further comprises the priority and/or an allocation and retention priority of the quality of service flow.

12. The method according to claim 3 or 4, wherein the first information comprises a third mapping relationship;
the third mapping relationship indicates a correspondence between a protocol data unit set importance in the quality of service flow to which the first protocol data unit set belongs and a differentiated services code point; and
the third mapping relationship is determined based on the protocol data unit set importance in the first protocol data unit set, or a quality of service identifier of the quality of service flow.

13. The method according to any one of claims 1 to 12, wherein determining, by the first apparatus, the differentiated services code point of the first data packet further comprises:
marking, by the first apparatus, the differentiated services code point in an IP packet header of the first data packet, and sending the first data packet to the access network device.

14. The method according to any one of claims 1 to 13, wherein the method further comprises:
receiving, by the first apparatus, indication information, wherein the indication information indicates the first apparatus to perform differentiated services code point marking on the first data packet at a granularity of a protocol data unit set.

15. A communication method, wherein the method comprises:
sending, by a second apparatus, indication information, a quality of service identifier, and/or a correspondence between a protocol data unit set importance and a differentiated services code point to a first apparatus, wherein
the indication information indicates the first apparatus to perform differentiated services code point marking on a data packet at a granularity of a protocol data unit set.

16. The method according to claim 15, wherein the method comprises:
obtaining, by the second apparatus, a policy and charging control rule, wherein the policy and charging control rule is used to determine the indication information, the quality of service identifier, and/or the correspondence between the protocol data unit set importance and the differentiated services code point.

17. The method according to claim 15 or 16, wherein the method comprises:
sending, by the second apparatus, a first differentiated services code point to the first apparatus, wherein
the first differentiated services code point corresponds to a first mapping relationship, and the first mapping relationship indicates the correspondence between the protocol data unit set importance and the differentiated services code point.

18. The method according to claim 17, wherein the first differentiated services code point is a differentiated services code point of a quality of service flow, and the first differentiated services code point is determined based on a quality of service identifier of the quality of service flow, or
determined based on a quality of service identifier of the quality of service flow and a priority and/or an allocation and retention priority of the quality of service flow.

19. The method according to claim 15 or 16, wherein the method comprises:
sending, by the second apparatus, a second mapping relationship to the first apparatus,
wherein
the second mapping relationship indicates a correspondence between a protocol data unit set importance in a quality of service flow and a differentiated services code point.

20. The method according to claim 19, wherein the second mapping relationship is determined based on a quality of service identifier of the quality of service flow and a protocol data unit set importance, or the second mapping relationship is determined based on a quality of service identifier of the quality of service flow, a protocol data unit set importance in a first protocol data unit set, and a priority and/or an allocation and retention priority of the quality of service flow; or
the second mapping relationship is determined based on a quality of service identifier of the quality of service flow, a protocol data unit set importance in a first protocol data unit set, and valid data of a first data packet, or the second mapping relationship is determined based on a quality of service identifier of the quality of service flow, a protocol data unit set importance in the first protocol data unit set, valid data of the first data packet, and a priority and/or an allocation and retention priority of the quality of service flow.

21. The method according to claim 19 or 20, wherein the method further comprises:
obtaining, by the second apparatus, a protocol data unit set identification method, wherein the protocol data unit set identification method is used to identify the first protocol data unit set.

22. The method according to claim 15 or 16, wherein the method comprises:
sending, by the second apparatus, a third mapping relationship to the first apparatus, wherein
the third mapping relationship indicates the correspondence between a protocol data unit set importance in a quality of service flow and a differentiated services code point; and
the third mapping relationship is determined based on a protocol data unit set importance in a first protocol data unit set, or a quality of service identifier of the quality of service flow.

23. The method according to claim 20, wherein the method further comprises:
sending, by the second apparatus, quality of service configuration information to an access network device, wherein the quality of service configuration information indicates a quality of service parameter; and
after sending, by the second apparatus, the quality of service configuration information to the access network device, the method further comprises:
receiving, by the second apparatus, feedback information from the access network device, wherein the feedback information indicates that the access network device supports service processing of a protocol data unit set.

24. The method according to any one of claims 17 to 23, wherein the method further comprises:
sending, by the second apparatus, the indication information to the first apparatus, wherein the indication information indicates the first apparatus to perform differentiated services code point marking on the data packet at the granularity of a protocol data unit set.

25. A communication apparatus, wherein the apparatus comprises a communication module and a processing module, wherein
the processing module is configured to perform an action of processing performed by the first apparatus in the communication method according to any one of claims 1 to 14, and the communication module is configured to perform an action of receiving or sending performed by the first apparatus in the communication method according to any one of claims 1 to 14; or
the processing module is configured to perform an action of processing performed by the second apparatus in the communication method according to any one of claims 15 to 24, and the communication module is configured to perform an action of receiving or sending performed by the second apparatus in the communication method according to any one of claims 15 to 24.

26. A communication system, wherein the system comprises a first apparatus, a second apparatus, an access network device, and an application server;
the first apparatus is configured to implement the communication method according to any one of claims 1 to 14, and the second apparatus is configured to implement the communication method according to any one of claims 15 to 24; and
the access network device is configured to receive a data packet generated by the first apparatus, and the application server is configured to send a data packet to the first apparatus.

27. A chip, comprising at least one processor and a memory communicatively connected to the at least one processor, wherein
the memory stores instructions that are capable of being executed by the at least one processor, and when the instructions are executed by the at least one processor, the at least one processor is caused to perform the communication method according to any one of claims 1 to 14, or the communication method according to any one of claims 15 to 24.

28. A computer-readable storage medium, wherein the storage medium stores a computer program, and when the computer program is executed, the communication method according to any one of claims 1 to 14 or the communication method according to any one of claims 15 to 24 is performed.
